(19) Europäisches Patentamt / European Patent Office / Office européen des brevets

(11) **EP 2 687 720 B1**

(12) **EUROPEAN PATENT SPECIFICATION**

(45) Date of publication and mention
of the grant of the patent:
**06.07.2016 Bulletin 2016/27**

(21) Application number: **11869763.0**

(22) Date of filing: **30.11.2011**

(51) Int Cl.:
*F03D 17/00* (2016.01)    *F03D 9/00* (2016.01)

(86) International application number:
**PCT/JP2011/077626**

(87) International publication number:
**WO 2013/080322 (06.06.2013 Gazette 2013/23)**

(54) **RENEWABLE ENERGY POWER GENERATION DEVICE AND METHOD FOR DETECTING OIL LEAKAGE OF THE SAME**

VORRICHTUNG ZUR STROMERZEUGUNG AUS ERNEUERBARER ENERGIE UND VERFAHREN ZUR ERKENNUNG EINES ÖLVERLUSTS DARIN

DISPOSITIF DE PRODUCTION D'ÉNERGIE À ÉNERGIE RENOUVELABLE ET PROCÉDÉ PERMETTANT DE DÉTECTER UNE FUITE D'HUILE DE CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.01.2014 Bulletin 2014/04**

(73) Proprietor: **Mitsubishi Heavy Industries, Ltd.
Tokyo 108-8215 (JP)**

(72) Inventor: **TSUTSUMI, Kazuhisa
Tokyo 108-8215 (JP)**

(74) Representative: **Intès, Didier Gérard André et al
Cabinet Beau de Loménie
158, rue de l'Université
75340 Paris Cedex 07 (FR)**

(56) References cited:
**EP-A1- 2 270 342          EP-A2- 2 182 208
WO-A1-95/23958          DE-A1-102007 009 575
DE-A1-102008 027 365     JP-A- H0 235 326
JP-A- H04 500 728         JP-A- H10 213 300
JP-A- 2003 270 079        JP-A- 2004 239 373
JP-A- 2007 327 398        JP-A- 2009 534 643
US-A1- 2011 142 596       US-B2- 7 436 086**

## Description

[Technical Field]

The present invention relates to a power generating apparatus of renewable energy type which transmits rotational energy of a rotor to a generator via a hydraulic transmission with combination of a hydraulic pump and a hydraulic motor and a method for detecting oil leak. The power generating apparatus of renewable energy type generates power from renewable energy such as wind, tidal current, ocean current and river current. The power generating apparatus of renewable energy type, for instance, includes a wind turbine generator, a tidal generator, an ocean current generator, a river current generator or the like.

[Background Art]

In recent years, from a perspective of preserving the environment, it is becoming popular to use a power generating apparatus of renewable energy type such as a wind turbine generator utilizing wind power and a power generating apparatus utilizing tidal current, ocean current or river current. In the power generating apparatus of renewable energy type, kinetic energy of the wind, tidal current, river current, etc. is converted to rotational energy of the rotor and the rotational energy of the rotor is then converted into electric power by the generator.

In this type of power generating apparatus of renewable energy type, the rotation of the rotor was small compared to the rated rotation speed of the generator and thus, it was common to provide a mechanical step-up gear between the rotor and the generator. As a result, the rotation speed of the rotor was increased to the rated rotation speed of the generator and then inputted to the generator.

As the power generating apparatus of renewable energy type becomes larger to improve power generation efficiency, the step-up gear increases in size and cost. For this reason, a power generating apparatus of renewable energy type adopting the hydraulic transmission with the hydraulic pump and the hydraulic motor, instead of the mechanical step-up gear, is becoming popular.

For instance, a wind turbine generator described in the prior art (see below) adopts a hydraulic transmission with a combination of a hydraulic pump driven by rotation of a rotor and a hydraulic motor connected to a generator. In the hydraulic transmission of this wind turbine generator, the hydraulic pump and the hydraulic motor are fluidically connected to each other via a high pressure oil line and a low pressure oil line. High pressure operating oil having been pressurized by the hydraulic pump is supplied to the hydraulic motor via the high pressure oil line and the pressure of the operating oil is converted by the hydraulic motor into a driving force of the generator. The low pressure oil discharged from the hydraulic motor is then returned to the hydraulic pump. In this manner, the operating oil circulates between the hydraulic pump and the hydraulic motor. Thus, it is desired to establish a method for detecting operating oil leak.

Although not regarding a power generating apparatus of renewable energy having a hydraulic transmission, a method for detecting oil leak is described as a common method in WO 1650/014584 According to the method, a pressure inside a pipe of a hydraulic unit is measured to detect oil leak.

US 2001/142596 discloses a power generating apparatus according to the preamble of claim 1. - EP 2 270 342 discloses a leakage detection system in a wind turbine. WO 95/23958 discloses an apparatus and method for detecting leak in hydraulic system. EP 2 182 208 discloses a protection arrangement for a wind turbine. DE 10 2007 009 575 discloses a wind turbine with a casing. DE 10 2008 027 365 discloses a liquid discharge device for a wind turbine. Further prior art documents disclosing a wind turbine with hydraulic transmission are WO 2007/053036,

US 2010/0032 959 and US 7436086.

[Summary of Invention]

[Technical Problem]

In the power generating apparatus adopting the hydraulic transmission, it is desired to establish the method for detecting oil leak from a part that is filled with the operating oil, such as the hydraulic pump, the hydraulic motor and the circulation path connecting the hydraulic pump and the hydraulic motor. However, there is no description on the method for detecting oil leak in the aforementiond WO2007/053036, US 2010/0032959 or US 7436086.

The detection method of WO1990/014584 may be applied to the power generating apparatus of renewable energy type using the hydraulic transmission. However, it is difficult to accurately detect oil leak in the case where the operating oil leaks gradually.

More specifically, the detection method of WO 1990/0144584 is intended for detecting oil leak by measuring the pressure inside the pipe of the hydraulic unit. Thus, it is possible to detect oil leak based on pressure change when the operating oil leaks substantially and the pressure suddenly drops. However, the pressure of the operating oil changes slightly due to errors of a pressure sensor, etc. and it is difficult to determine the cause of the small change in the pressure and it is also difficult to accurately detect the oil leak in the case where the operating oil leaks slowly.

As another detection method, the oil leak may be detected using images by taking an image of a part where the oil leak is expected. However, it is difficult to take images of every part that is filled with the operating oil and the oil leak possibly gets overlooked. Further, it is difficult to accurately detect oil leak in the case where the operating oil leaks slowly.

In view of the above issues, an object of the present invention is to provide a power generating apparatus of renewable energy type that is capable of detecting leak of the operating oil of the hydraulic transmission and, in particular, capable of surely detecting oil leak even when the operating oil leaks slowly, and a method for detecting the oil leak.

[Solution to Problem]

The present invention is defined by the appended claims. According to an embodiment, a power generating apparatus of renewable energy type for generating power utilizing renewable energy, comprises:

a rotation shaft configured to be driven by the renewable energy;
a hydraulic pump configured to be driven by rotation of the rotation shaft so as to pressurize operating oil;
a hydraulic motor configured to be driven by the operating oil pressurized by the hydraulic pump;
a generator connected to the hydraulic motor;
a closed-cycle circulation path through which the operating oil is circulated between the hydraulic pump and the hydraulic motor;
an accumulator comprising: an oil chamber in communication with the circulation path; a gas chamber containing gas in a hermetically sealed manner; and a deformable or movable diaphragm separating the oil chamber and the gas chamber;
an oil tank provided in the circulation path to store the operating oil:

a gas-pressure obtaining unit for obtaining a pressure of the gas in the gas chamber;
an oil-amount measuring unit for measuring an amount of the operating oil in the oil tank;
a threshold determination unit for determining a threshold value based on change in volume of the gas chamber which is calculated from the pressure of the gas obtained by the gas-pressure obtaining unit;
a comparison unit for comparing the threshold value with the amount of the operating oil measured by the oil-amount measuring unit; and
a leak determination unit for determining leak of the operating oil based on a comparison result of the comparison unit.

Inventors of the present invention have learned the following from diligent examination on oil leak in the power generating apparatus of renewable energy type having the hydraulic transmission.

In the case where the circulation path for circulating the operating oil is a closed cycle and there is no leak of the operating oil to the outside, the change in volume of the operating oil stored in the oil tank is expected to coincide with the change in volume of the operating oil reserved in the accumulator. Further, the accumulator is formed by the oil chamber and the gas chamber that are separated by the deformable or movable diaphragm and thus the change in volume of the operating oil coincides with the change in volume of the gas chamber. Therefore, when there is no leak of the operating oil, a certain correlation is expected to be established between the change in volume of the gas in the accumulator and the amount of the operating oil in the oil tank.

The present invention is made based on the knowledge of the inventors and the circulation path is formed of a closed cycle and the threshold value of the amount of the operating oil in the oil tank is determined based on the change in volume of the gas chamber of the accumulator and based on the threshold value and the measured amount of the operating oil in the oil tank, leak of the operating oil is determined. Therefore, when the measured amount of the operating oil in the oil tank is smaller than the threshold value, it is determined that there is leak of operating oil to the outside.

As described above, leak of the operating oil is detected using the relationship between the change in volume of the gas chamber and the amount of the operating oil in the oil tank and thus, it is possible to accurately detect leak of the operating oil.

Particularly, when there is small leak of the operating oil, an amount of the leaking operating oil is reflected on the difference between the measured amount of the operating oil and the threshold value and thus the oil leak can be accurately detected.

In the above power generating apparatus of renewable energy type, the threshold value may be set within a range of $0.85V_0$ to $1.04V_0$ where $V_0$ is the amount of the operating oil in the oil tank calculated from the change in volume of the gas chamber in a case where the gas changes isothermally.

In the actual change of gas state, complete isothermal change or adiabatic change is possible and thus, a relationship between the pressure and the volume of the gas is intermediate between the isothermal change and the adiabatic change.

Normally, the heat of the gas in the accumulator is partially radiated to outside and thus complete adiabatic change is impossible to take place. Meanwhile, it is normally difficult to strictly maintain the gas in the accumulator in an isothermal manner and thus complete isothermal change is impossible. Therefore, a relationship between the pressure and the volume of the gas in the accumulator is normally intermediate between the isothermal change and the adiabatic change.

In the hydraulic transmission of the power generating apparatus of renewable energy type, difference between volumetric change of the gas chamber in the isothermal change and volumetric change of the gas chamber in the adiabatic change is calculated under normal design conditions, and the calculated difference is about 4% of the amount of the operating oil in the oil tank. In other words, when the amount of the operating oil in the oil tank calculated from the change in volume of the gas chamber in the case where the gas changes isothermally, is $V_0$. the amount of the operating oil in the oil tank in the case where the gas changes adiabatically is $1.04V_0$. Therefore, the amount of the operating oil, $V_0$ in the oil tank possibly changes up to the upper limit $1.04Vu$, depending on how the gas changes.

In this aspect of the present invention, the pressure of the gas in the accumulator and the amount of the operating oil in the oil tank are measured and based on the measured values, oil leak is determined. Thus, there might be some errors such as measurement error, calculation error, and errors in measuring the pressure of the gas contained in the accumulator, etc. Considering the total amount of the operating oil of the hydraulic transmission used in a regular power generating apparatus of renewable energy type, the error is approximately 15% of the amount of the operating oil in the oil tank. Herein, in the case where the gas changes isothermally, the amount of the operating oil in the oil tank becomes the lowest. Thus, with the above errors in consideration, the amount of the operating oil in the oil tank possibly changes up to the lower limit $0.85V_0$ where Vo-is the amount of the operating oil in the oil tank calculated from the change in volume of the gas.

Therefore, based on the change in volume of the operating oil in the oil tank as described above, the threshold value is set within a range of $0.85V_0$ to $1.04V_0$ so as to obtain an appropriate threshold value with the change of the gas state and the errors in consideration.

Alternatively, the threshold value may be set within a range of $0.85V_0$ to $1.04V_0$ where $V_0$ is the amount of the operating oil in the oil tank calculated from the change in volume of the gas chamber in a case where a state of the gas changes in a range of a polytropic index expected when the gas changes polytropically.

As described above, in the case where the polytropic index can be obtained beforehand by experiments, simulation, etc., by setting the threshold value within the above range, it is possible to detect the oil leak more accurately.

In the above power generating apparatus of renewable energy type, a plurality of the accumulators may be connected to the circulation path, and the threshold determination unit may be configured to determine the threshold value based on a sum of the change in volume of a plurality of the gas chambers of the plurality of accumulators calculated from the pressure of gas in the plurality of the gas chambers of the plurality of accumulators, respectively.

By determining the threshold value based on a sum of the change in volume of the gas chambers of the accumulators, leak of the operating oil can be accurately detected even in the case where a plurality of accumulators is connected.

In this case, the circulation path may include:

a high pressure oil line provided between an outlet of the hydraulic pump and an inlet of the hydraulic motor; and
a low pressure oil line provided between an outlet of the hydraulic motor and an inlet of the hydraulic pump, and
the plurality of the accumulators may include:

a high pressure accumulator whose oil chamber is connected to the high pressure oil line; and
a low pressure accumulator whose oil chamber is connected to the low pressure oil line.

In this aspect of the present invention, the threshold value is set based on the change in volume of the gas chamber calculated from the pressure of the gas in each accumulator. Thus, even in the case where there is a plurality of accumulators under different pressure conditions as described above, the oil leak can be detected appropriately.

The above power generating apparatus of renewable energy type may further comprise:

a temperature sensor for measuring a temperature of the operating oil; and
a correction unit for correcting one of the threshold value or the measured amount of the operating oil based on the temperature of the operating oil measured by the temperature sensor, and
the comparison unit may be configured to compare said one of the threshold value or the measured amount that has been corrected by the correction unit with the other of the threshold value or the measured amount.

The gas in the accumulator normally maintains a constant temperature in spite of heat transfer from the operating oil via the diaphragm. However, temperature change of the operating oil can results in temperature change of the gas. The change in temperature of the gas causes the volume of the gas to change. Therefore, by measuring the temperature of the operating oil by means of the temperature sensor and then correcting one of the threshold value or the measured amount of the operating oil based on the measured temperature, it is possible to detect leak of the operating oil more accurately.

The above power generating apparatus of renewable energy type according may further comprise:

a memory unit for storing a relationship between the pressure of the gas in the gas chamber and an estimated amount of the operating oil in the oil tank that is estimated from the change in volume of the gas chamber at said pressure; and
a calculation unit for calculating the threshold value by applying to the stored relationship the pressure of the gas obtained by the gas-pressure obtaining unit.

As described above, the relationship between the pressure of the gas in the gas chamber and the estimated amount of the operating oil in the oil tank that is estimated from the change in volume of the gas chamber at said pressure is stored in advance in the memory unit and based on the stored relationship, the threshold value is calculated. As a result, it takes less time to perform the calculation and also it is possible to detect oil leak immediately.

In the above power generating apparatus of renewable energy type, the hydraulic pump, the hydraulic motor and the circulation path may be arranged in a nacelle,

the power generating apparatus may further comprise an odor sensor provided in an interior space of the nacelle and configured to detect odor of the operating oil, and the leak determination unit may be configured to determine the leak of the operating oil based on the comparison result and the odor detected by the odor sensor.

As described above, in addition to the oil detection using the amount of the operating oil in the tank, leak of the operating oil is determined by detecting the odor using the odor sensor provided in the nacelle. Thus, it is possible to enhance reliability of the oil detection.

The above power generating apparatus of renewable energy type may further comprise:

an oil receiver arranged under at least one of the hydraulic pump, the hydraulic motor or the circulation path; and
an imaging camera for taking an image of at least one of the hydraulic pump, the hydraulic motor, the circulation path, or the oil receiver, and
the leak determination unit may be configured to determine the leak of the operating oil based on the comparison result and the image taken by the imaging camera.

As described above, the oil receiver is arranged in a possible leaking area so as to receive the leaking operating oil in case the operating oil leaks. Further, in addition to the oil leak detection using the amount of the operating oil in the oil tank, leak of the operating oil is determined based on the image of the oil receiver taken by the imaging camera and thus, it is possible to improve reliability of the oil detection. Furthermore, by visually confirming the image, it is possible to locate a place of the oil leak.

In this case, the imaging camera may be an infrared sensor for taking an infrared image, and the leak determination unit may be configured to determine the leak of the operating oil based on the comparison result and temperature distribution of the infrared image.

The operating oil in the hydraulic transmission is pressurized in the hydraulic pump and thus the temperature of the operating oil is maintained higher than the outside air temperature. Thus, it is easy to locate a high temperature spot based on the temperature distribution of the infrared image taken by the infrared sensor and the leak of the operating oil can be detected easily and promptly.

The above power generating apparatus of renewable energy type may further comprise:

an optical fiber arranged in periphery of at least one of the hydraulic pump, the hydraulic motor, the circulation path or the accumulator, the optical fiber changing in light amount when fluid adheres to the optical fiber, and
the leak determination unit may be configured to determine the leak of the operating oil based on the comparison result and change in the light amount of the optical fiber.

As described above, the optical fiber is arranged in periphery of at least one of the hydraulic pump, the hydraulic motor, the circulation path or the accumulator and leak of the operating oil is detected based on the change in the light amount of the light optical fiber when there is leak of the operating oil. As a result, it is possible to enhance reliability of the oil leak detection.

In the above power generating apparatus of renewable energy type,

the hydraulic pump, the hydraulic motor and the circulation path may be arranged in a nacelle, and
the power generating apparatus may further comprise an oil-receiving floor provided in an upper space of a tower which supports the nacelle and configured to receive the operating oil leaking from a nacelle side toward a tower side, the oil-receiving floor having a through-hole that is closable.

In the case where the hydraulic pump, the hydraulic motor and the circulation path are arranged in the nacelle, an oil-receiving floor may be provided in an upper interior space of the tower and the oil-receiving floor may have a through-hole penetrating this floor downward. Thus, it is possible to prevent the operating oil from falling past this oil-receiving floor.

According to an embodiment, provided is a method for detecting oil leak of a power generating apparatus of renewable energy type comprising: a rotation shaft configured to be driven by the renewable energy; a hydraulic pump configured to be driven by rotation of the rotation shaft to pressurize operating oil; a hydraulic motor configured to be driven by the operating oil pressurized by the hydraulic pump; a generator connected to the hydraulic motor; a closed-cycle circulation path through which the operating oil is circulated between the hydraulic pump and the hydraulic motor; an accumulator comprising an oil chamber in communication with the circulation path, a gas chamber containing gas in a hermetically sealed manner, and a deformable diaphragm separating the oil chamber and the gas chamber; and an oil tank provided in the circulation path to store the operating oil. This method comprises:

a pressure obtaining step of obtaining a pressure of the gas in the gas chamber of the accumulator;

a measuring step of measuring an amount of the operating oil in the oil tank;

a threshold determining step of determining a threshold value based on change in volume of the gas chamber calculated from the pressure of the gas obtained in the pressure obtaining step;

a comparing step of comparing the threshold value determined in the threshold determining step with the amount of the operating oil measured in the measuring step; and

a leak determining step of determining leak of the operating oil based on comparison result in the comparing step.

As described above, leak of the operating oil is detected based on the relationship between the change in volume of the gas chamber of the accumulator and the amount of the operating oil in the oil tank. Thus, it is possible to detect leak of the operating oil accurately. Particularly, when there is small leak of the operating oil, an amount of the leaking operating oil is surely reflected on the difference between the measured amount of the operating oil and the threshold value and thus the oil leak can be surely detected.

In the above method of detecting the oil leak, the threshold value may be set within a range of $0.85V_0$ to $1.04V_0$ where $V_0$ is the amount of the operating oil in the oil tank calculated from the change in volume of the gas chamber in a case where the gas changes isothermally changes.

As a result, the threshold value can be set appropriately with the change of the gas state and the errors in consideration.

In the above method of detecting the oil leak, an odor sensor may be provided in a nacelle where the hydraulic pump, the hydraulic motor and the circulation path are arranged, the odor sensor being configured to detect odor of the operating oil, and

in the threshold determining step, the leak of the operating oil may be determined based on the comparison result and the odor detected by the odor sensor.

As described above, in addition to the oil detection using the amount of the operating oil in the tank, leak of the operating oil is determined by detecting the odor using the odor sensor provided in the nacelle. Thus, it is possible to enhance reliability of the oil detection.

In the above method of detecting the oil leak, an oil receiver may be arranged under at least one of the hydraulic pump, the hydraulic motor or the circulation path,

an imaging camera may be provided to take an image of at least one of the hydraulic pump, the hydraulic motor, the circulation path, or the oil receiver, and

in the threshold determining step, the leak of the operating oil may be determined based on the comparison result and the image taken by the imaging camera.

As described above, in addition to the oil detection using the amount of the operating oil in the tank, leak of the operating oil is determined based on the image of the oil receiver taken by the imaging camera and thus, it is possible to improve reliability of the oil detection. Furthermore, by visually confirming the image, it is possible to locate a place of the oil leak.

In this case, the imaging camera may be an infrared sensor for taking an infrared image, and in the threshold determining step, the leak of the operating oil may be determined based on the comparison result and temperature distribution of the infrared image.

As a result, it is easy to locate a high temperature spot based on the temperature distribution of the infrared image taken by the infrared sensor and the leak of the operating oil can be detected easily and promptly.

Moreover, the power generating apparatus of renewable energy type may be a wind turbine generator for generating power from wind in a form of the renewable energy.

[Advantageous Effects]

According to the first embodiment of the present invention, leak of the operating oil is detected based on the relationship between the change in volume of the gas chamber of the accumulator and the amount of the operating oil in the oil tank. Thus, it is possible to detect leak of the operating oil accurately. Particularly, when there is small leak of the operating oil, an amount of the leaking operating oil is surely reflected on the difference between the measured amount of the operating oil and the threshold value and thus the oil leak can be surely detected.

[brief Description of Drawings]

[FIG.1] FIG.1 is an illustration of a configuration of a hydraulic transmission and a processing unit of a wind turbine generator.

[FIG.2] FIG.2 is an illustration of change in volume of the operating oil in the accumulator and the oil tank.

[FIG.3] FIG.3 is a graph schematically illustrating the isothermal change and the adiabatic change of the gas.

[FIG.4] FIG.4 is a table illustrating the adiabatic change and the isothermal change of the gas contained in the high pressure accumulator in a hermetically sealed manner.

[FIG.5] FIG.5 is a table illustrating the adiabatic change and the isothermal change of the gas contained in the low pressure accumulator in a hermetically sealed manner.

[FIG.6] FIG.6 is a table representing a relationship, in the case of adiabatic change, between the pressure of the gas and the amount of the operating oil in the tank.

[FIG.7] FIG.7 is a table representing a relationship, in the case of isothermal change, between the pressure of the gas and the amount of the operating oil in the tank.

[FIG.8] FIG.8 is a three-dimensional graph of the adiabatic change of FIG.6.

[FIG.9] FIG.9 is a three-dimensional graph of the isothermal change of FIG.7.

[FIG.10] FIG.10 is a flow chart regarding how to detect oil leak of the wind turbine generator.

[FIG.11] FIG.11 is an illustration of a modified version of the wind turbine generator.

[FIG.12A] FIG.12A is an illustration of an oil-receiving floor in a covered state.

[FIG.12B] FIG.12B is an illustration of the oil-receiving floor in an open state.

[Description of Embodiments]

Embodiments of the present invention will now be described in detail with reference to the accompanying drawings. It is intended, however, that unless particularly specified, dimensions, materials, shape, its relative positions and the like shall be interpreted as illustrative only and not limitative of the scope of the present invention.

In the embodiment of this invention, a wind turbine generator is described as one form of a power generating apparatus of renewable energy type. However, this is not limitative and the present invention is also applicable to any power generating apparatus which utilizes renewable energy, such as a tidal generator, an ocean current generator and a river current generator.

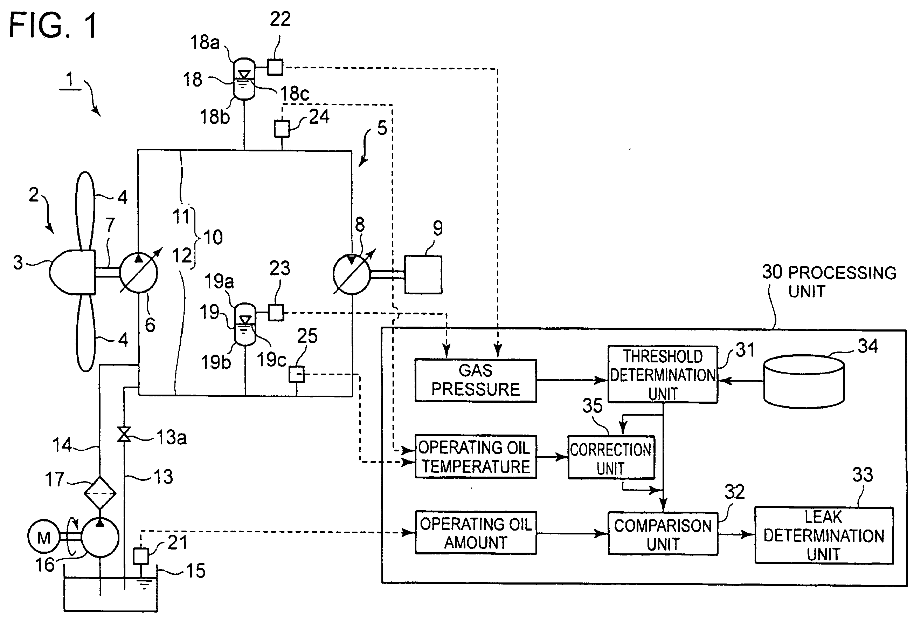

FIG.1 is an illustration of a configuration of a hydraulic transmission and a processing unit of a wind turbine generator.

As illustrated in the drawing, the wind turbine generator is mainly provided with a rotor 2 rotating upon receiving wind, a hydraulic transmission 5 for increasing rotation of the rotor 2, a generator 9 for generating electrical power, and a processing unit 30 for detecting oil leak of the hydraulic transmission 5.

The rotor 2 is configured such that blades 4 are mounted to a hub 3 and a rotation shaft 7 is coupled to the hub 3. The rotor 2 is rotated by wind power hitting the blades 4 and the rotation is inputted to the hydraulic transmission 5 via the rotation shaft 7.

The hydraulic transmission 5 is formed by a hydraulic pump 6 of variable displacement type, a hydraulic motor 8 of variable displacement type 8, and a closed-cycle circulation path 10 fluidically connecting the hydraulic pump 6. The hydraulic pump 6 is configured to be driven by rotation of the rotation shaft 7. The hydraulic motor 8 is connected to the generator 9. The circulation path 10 includes a high pressure oil line 11 and a low pressure oil line 12. As a result, when the hydraulic pump 6 is driven in response to rotation of the rotation shaft 7, a pressure difference is generated between the high pressure oil in the high pressure oil line 11 and the low pressure oil in the low pressure oil line 12. This pressure difference drives the hydraulic motor 8.

The generator 9 is coupled to an output shaft of the hydraulic motor 8 and generates power using torque inputted from the hydraulic motor 8.

The structure of the hydraulic transmission 5 is now described in details.

The hydraulic transmission 5 includes the hydraulic pump 6, the hydraulic motor 8 and the circulation path 10 having the high pressure oil line 11 and the low pressure oil line 12. The high-pressure oil line 11 is provided between a discharge side of the hydraulic pump 6 and an intake side of the hydraulic motor 8. The low-pressure oil line 12 is provided between an intake side of the hydraulic pump 6 and a discharge side of the hydraulic motor 8.

In the hydraulic transmission 5, a replenishing line 14, an oil tank 15, a boost pump 16, an oil filter 17 and a return line 13 are provided.

The replenishing line 14 connects the oil tank 15 to the low pressure oil line 12.

The oil tank 15 stores operating oil for replenishment. In the oil tank 15, a fluid-level sensor 21 is provided as an oil-amount measuring unit. The measurement result of the fluid-level sensor 21 is inputted to the processing unit 30 and is used in the processing unit 30 to detect oil leak. Further, the oil-amount measuring unit is not limited to the fluid-level sensor 21 as long as it is capable of measuring the amount of the operating oil reserved in the oil tank 15.

The boost pump 16 is provided in the replenishing line 14. The boost pump 16 is configured to replenish the low pressure oil line 12 with the operating oil from the oil tank 15. In this case, the operating oil supplied to the low pressure oil line 12 is passed through the oil filter 17 provided in the replenishing line 14 so as to remove impurities contained in the operating oil.

As a result, even when the operating oil leaks in the hydraulic transmission 5, the boost pump 16 replenishes the low pressure line 12 with the operating oil from the oil tank 15. Thus, the amount of the operating oil circulation in the hydraulic transmission is maintained.

The return line 13 is provided between the oil tank 15 and the low pressure oil line 12. In the low pressure oil line 13, a low pressure relief valve 13a is provided to maintain the pressure in the low pressure oil line 12 near a setting pressure of the relief valve 13.

As a result, in the case where the operating oil is supplied to the low pressure oil line 12 by the boost pump 16, once the pressure inside the low pressure oil line 12 reaches the setting pressure of the relief valve 13, the low pressure relief valve 13a automatically opens to release the operating oil to the oil tank 15 via the return line 13. Therefore, the amount of the operating oil circulating in the hydraulic transmission 5 is maintained at an appropriate level.

Further, in the circulation path 10, one or more accumulator may be provided.

A high pressure accumulator 18 is connected to the high pressure oil line 11. This high pressure accumulator 18 includes an oil chamber 18b in communication with the high pressure oil line 11, a gas chamber 18a containing gas in a hermetically sealed manner, and a deformable or movable diaphragm 18c separating these chambers. In the gas chamber 18a, gas having a prescribed pressure is enclosed during gas enclosure. In the high pressure accumulator 18, a valve (not shown) may be provided to block communication between the high pressure oil line 11 and the oil chamber 18b. In the case where the valve is provided, when performing oil leak detection which is described later, the valve is opened to allow the communication between the high pressure oil line 11 and the oil chamber 18b.

As an example configuration of the high pressure accumulator 18, a deformable bag (a bladder) is housed in a housing which communicates with the high pressure oil line 11. Further, the gas chamber 18a is formed by the bladder and the gas is enclosed in the bladder. The other space separated from the gas chamber 18a by the bladder in the housing is the oil chamber 18b communicating with the high pressure oil line 11. In this case, the bladder functions as the deformable diaphragm 18c separating the gas chamber 18a and the oil chamber 18b.

As another example configuration of the high pressure accumulator 18, a piston may be used instead of the bladder. The piston is slidable within the housing and by moving the piston forward and backward, the volume of the gas chamber 18a changes. In this case, the piston functions as the deformable diaphragm 18c separating the gas chamber 18a and the oil chamber 18b.

In this type of high pressure accumulator 18, when the pressure of the operating oil increases in the high pressure oil line 11. the operating oil enters the high pressure accumulator 18. thereby compressing the gas. Then, the high pressure accumulator 18 absorbs the operating oil to the level that the pressure of the compressed gas and the pressure of the operating oil are balanced.

Herein, the high pressure accumulator 18 is provided for the purpose of suppressing pulsations and reserving pressure of the high pressure oil. The high pressure accumulator 18 as pressure storage reservoir is capable of smoothing out drastic pressure change in the high pressure oil line 11. For instance, the high pressure accumulator 18 as pressure storage reservoir may absorb sudden increase in pressure of the high pressure oil line 11 resulting from drastic decrease in displacement of the hydraulic motor 8 to prevent acceleration of the generator shaft when voltage drops in the grid connected to the generator 9.

Further, a plurality of high pressure accumulators 18 may be provided, each of which contains gas of different pressure in the gas chamber 18a, and thus it is possible to vary the amount of the absorbed operating oil for each of the accumulators with respect to the pressure of the operating oil. Furthermore, in the case where the high pressure accumulator 18 is a pressure storage reservoir, the high pressure oil reserved in the high pressure accumulator 18 may be used to assist rotation of the hydraulic motor 8.

In contrast, a low pressure accumulator 19 is connected to the low pressure oil line 12. This low pressure accumulator 19 includes an oil chamber 19b in communication with the circulation path 10, a gas chamber 19a containing gas in a hermetically sealed manner, and a deformable or movable diaphragm 19c separating these chambers 19a, 19b. Similarly to the high pressure accumulator 18, in the low pressure accumulator 19, a valve (not shown) may be provided to block communication between the low pressure oil line 12 and the oil chamber 19b. In the case where the valve is provided, when performing the oil leak detection which is described later, the valve is opened to allow the communication between the low pressure oil line 12 and the oil chamber 19b. The detailed description of the low pressure accumulator 19 is omitted as it is substantially the same as the high pressure accumulator 18.

Herein, the low pressure accumulator 19 is provided for the purpose of suppressing pulsations and reserving pressure of the low pressure oil. In the case where the low pressure accumulator 19 is used as pressure storage reservoir, the low pressure accumulator 19 is used as follows. In the case where the boost pump 16 is small, when the high pressure accumulator 18 absorbs the operating oil and then discharges the operating oil so as to return the entire amount of the operating oil to the oil tank 15, it takes time to return the operating oil from the oil tank 15 to the low pressure oil line 12 by means of the boost pump 16 and abnormalities occur, such as the low pressure oil line 12 being vacuum. In order to avoid such abnormalities, the low pressure accumulator 19 has enough capacity to absorb the above amount of operating oil so as to maintain a constant pressure or above in the low pressure oil line 12.

Further, in FIG.1, the accumulators 18, 19 are provided in the high pressure oil line 11 and the low pressure oil line 12, respectively. However, this is not limitative as long as there is at least one of the high pressure accumulator 18 or the low pressure accumulator in the circulation path 10. Obviously, a plurality of high pressure accumulators 18 may be provided in the high pressure oil line 11 or a plurality of low pressure accumulators 19 may be provided in the low pressure oil line 12.

Furthermore, in the case where a plurality of accumulators 18, 19 each of which has the valve for blocking communication between the circulation path 10 and the oil chamber 18b, 19b, even if some accumulators 18, 19 are in the closed-valve state, it is still possible to perform oil leak detection described later by means of other accumulators that are not in the closed-valve state and are in communication with the circulation path 10.

In the high pressure accumulator 18, a pressure sensor 22 is provided as the gas-pressure obtaining unit.

The pressure sensor 22 detects the pressure of the gas in the gas chamber 18a of the high pressure accumulator 18. In the low pressure accumulator 19, a pressure sensor 23 is provided as the gas-pressure obtaining unit. The pressure sensor 22 detects the pressure of the gas in the gas chamber 19a of the low pressure accumulator 19. The gas pressure detected by these pressure sensors 22, 23 are input to the processing unit 30 and used by the processing unit 30 for detecting oil leak.

The processing unit 30 includes a threshold determination unit 31, a comparison unit 32 and a leak determination unit 33.

The threshold determination unit 31 is configured to determine an amount of volume change in each gas chamber 18a. 19a from the pressure of the gas in the accumulator 18. 19 detected by the pressure sensor 22. 23 and based on the determined amount of volume change, a threshold value of the operating oil in the oil tank 15 is determined. The threshold determination process is described later in details.

The comparison unit 32 is configured to compare the threshold value determined by the threshold determination unit 31 with the amount of the operating oil measured by the fluid level sensor 21.

The leak determination unit 33 is configured to determine leak of the operating oil based on comparison result of the comparison unit 32.

The threshold determination process is described in details below.

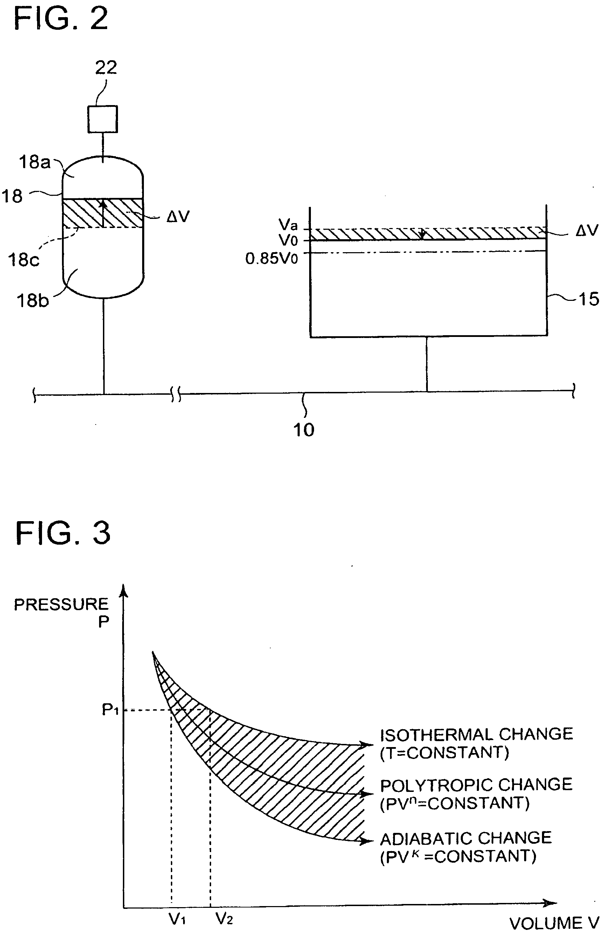

FIG.2 is an illustration of change in volume of the operating oil in the accumulator and the oil tank. Herein, for ease of explanation, just one accumulator 18 is provided in communication with the circulation path 10 to which the oil tank 15 is connected.

The accumulator 18 communicates with the circulation path 10 and thus the amount of the operating oil absorbed by the accumulator changes in accordance with the pressure of the operating oil in the circulation path 10. Herein, the change in volume of the accumulator is described as $\Delta V$.

In this case, if there is no leak of the operating oil as the circulation path 10 is closed cycle, the change in volume $\Delta V$ of the oil tank 15 coincides with the change in volume $\Delta V$ of the accumulator 18. The change in volume $\Delta V$ of the oil tank 15 and the change in volume $\Delta V$ of the accumulator 18 are opposite in plus-minus sign.

An original volume of the operating oil in the oil tank 15 before the volume change is obtained in advance and used as a standard volume Va. To this standard volume Va, change in volume of the operating oil in the oil tank 15, $\Delta V$ (=the change in volume of the accumulator 18) is added so as to calculate the volume of the operating oil in the oil tank, Vo. Based on this volume $V_0$ of the operating oil in the oil tank 15, a threshold value is determined.

In contrast, the change in volume of the operating oil in accumulator 18 is the same as the change in volume of the gas, which is calculated from the pressure of the gas. Therefore, the pressure of the gas chamber 18a of the accumulator 18 is detected by the pressure sensor 22 and from this pressure, the change in volume of the gas. $\Delta V$ can be calculated. Similarly to the oil tank 15, a standard volume of the gas in the accumulator 18 when the gas is enclosed is obtained.

As described above, the threshold value is determined in the following manner. First, the change in volume of the gas, $\Delta V$ is calculated from the pressure of the gas in the accumulator 18. Based on the change in volume of the gas, $\Delta V$, the amount of the operating oil in the oil tank 15 is calculated on the assumption that there is not oil leak. Finally, based on the amount of the operating oil in the oil tank 15, the threshold value is determined. As a result, it is possible to determine oil leak when the amount of the operating oil in the oil tank 15 is less than the threshold value.

However, the following elements need to be considered when calculating the change in volume of the gas, $\Delta V$ from the pressure of the gas in the accumulator 18.

The heat of the gas in the gas chamber 18a in part is normally radiated to outside and thus complete adiabatic change is impossible. Meanwhile, it is normally difficult to isothermally maintain the gas in the gas chamber 18a and thus complete isothermal change is impossible. Therefore, a relationship between the pressure and the volume of the gas in the gas chamber 18a is normally intermediate between the isothermal change and the adiabatic change.

FIG.3 is a graph schematically illustrating the isothermal change and the adiabatic change of the gas. The drawing illustrates polytropic change which is represented by Formula (1) where P is pressure and V is volume.

## Formula (1)

$$PV^n = \text{constant}$$

In the formula, n is polytropic index. By using the polytropic index, the isothermal change and the adiabatic change can be generalized. In the isothermal change where temperature T=constant, the polytropic index n=1.00, whereas in the adiabatic change where $PV^\kappa$=constant, the polytropic index n=$\kappa$ (=1.405). Further, $\kappa$ is a ratio of specific heat (or adiabatic index).

In such a state that only one accumulator 18 communicates with the circulation path 10, the relationship between the pressure P and the volume V of the gas chamber 18a of the accumulator 18 changes in between the adiabatic change and the isothermal change (the hatched area) in FIG.3. Therefore, with respect to the pressure $P_1$ of the gas, the volume V is a value between volume $V_1$ of the adiabatic change and volume $V_2$ of the isothermal change.

Difference between volumetric change of the gas chamber in the isothermal change and volumetric change of the gas chamber in the adiabatic change, is calculated under normal design conditions, and the difference is about 4% of the amount of the operating oil in the oil tank 15. In other words, when the amount of the operating oil in the oil tank 15 calculated from the change in volume of the gas chamber 18a in the case where the gas changes isothermally, is $V_0$ as shown in FIG.2, the amount of the operating oil in the oil tank 15 in the case where the gas changes adiabatically is $1.04V_0$. Therefore, the amount of the operating oil, $V_0$ in the oil tank 15 possibly changes up to the upper limit $1.04V_0$, depending on how the gas changes.

In contrast, in the oil leak detection according to this embodiment, there might be some errors such as measurement error, calculation error, and errors in measuring the pressure of the gas contained in the accumulator, etc. Considering the total amount of the operating oil of the hydraulic transmission 5 used in a regular wind turbine generator 1, the error is approximately 15% of the amount of the operating oil in the oil tank 15. Herein, in the case where the gas changes isothermally, the amount of the operating oil in the oil tank 15 becomes the lowest. Thus, with the above errors in consideration, the amount of the operating oil in the oil tank 15 possibly changes up to the lower limit $0.85V_0$ where $V_0$ is the amount of the operating oil in the oil tank 15 calculated from the change in volume of the gas

Therefore, based on the change in volume of the operating oil in the oil tank 15 as described above, the threshold value is set within a range of $0.85V_0$ to $1.04V_0$ so as to obtain an appropriate threshold value with the change of the gas state and the errors in consideration.

The threshold value may be set within a range of $0.85V_0$ to $1.04V_0$ where $V_0$ is the amount of the operating oil in the oil tank 15 calculated from the change in volume of the gas chamber 18a in the case where the state of the gas changes in a range of a polytropic index expected when the gas changes polytropically.

In the case where the polytropic index can be obtained beforehand by experiments, simulation, etc., on the assumption that the state of the gas changes in the range of the polytropic index, the amount of the operating oil in the oil tank 15, $V_0$ can be calculated from the change in volume of the gas chamber 18a. In this case, the threshold value is set within a range of $0.85V_0$ to $1.04V_0$. As described above, by setting the threshold value using the polytropic index, it is possible to detect the oil leak more accurately.

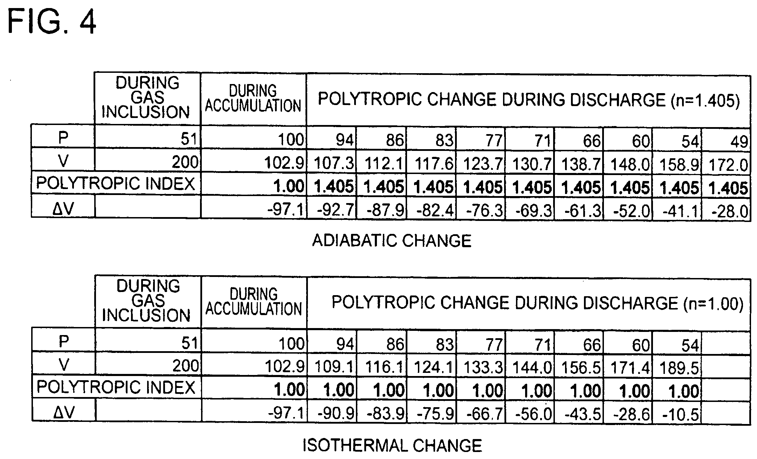

In the case described above, one accumulator 18 is provided. Now described in reference to FIG.4 to FIG.9 is the case where two accumulators 18 are provided. As already described in reference to FIG.1, this apparatus includes the circulation path 10 formed by the high pressure accumulator 18 communicating with the high pressure oil line 11 and the low pressure accumulator 19 communicating with the low pressure oil line 12.

FIG.4 is a table illustrating the adiabatic change and the isothermal change of the gas contained in the high pressure accumulator in a hermetically sealed manner. The top table shows: the pressure of the gas in the case of adiabatic change; and the volume of the gas corresponding to this gas pressure and the change in volume of the gas, $\Delta V$. The bottom table shows: the pressure of the gas in the case of isothermal change; and the volume of the gas corresponding to this gas pressure and the change in volume of the gas, $\Delta V$. As described above, the gas contained in the gas chamber 18a in a hermetically sealed manner changes in a manner between the adiabatic change and the isothermal change. Therefore, the change in volume, $\Delta V$ with respect to the pressure P detected by the pressure sensor 22, is a value between a lower limit constituted of the change in volume $\Delta V$ in the case of isothermal change and an upper limit constituted of the change in volume $\Delta V$ in the case of adiabatic change.

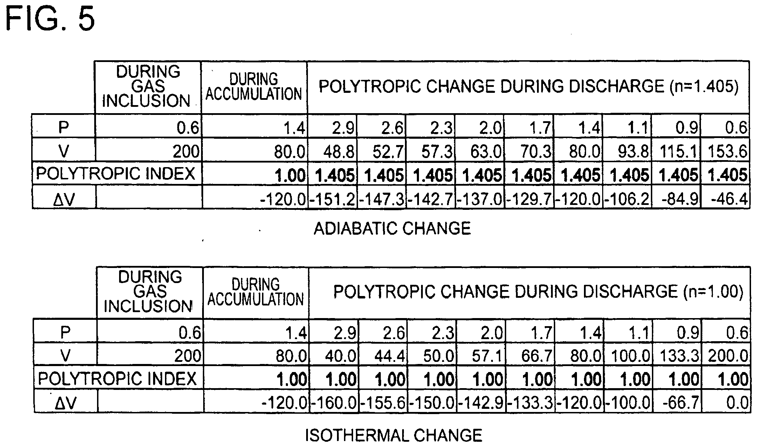

FIG.5 is a table illustrating the adiabatic change and the isothermal change of the gas contained in the low pressure accumulator in a hermetically sealed manner. The top table shows: the pressure of the gas in the case of adiabatic change; and the volume of the gas corresponding to this gas pressure and the change in volume of the gas, $\Delta V$. The bottom table shows: the pressure of the gas in the case of isothermal change; and the volume of the gas corresponding to this gas pressure and the change in volume of the gas, $\Delta V$. The change in volume, $\Delta V$ with respect to the pressure P detected by the pressure sensor 23, is a value between a lower limit constituted of the change in volume $\Delta V$ in the case of isothermal change and an upper limit constituted of the change in volume $\Delta V$ in the case of adiabatic change.

In FIG.4 and FIG.5, the pressure P is a pressure relative to the pressure of the high pressure accumulator 19 during accumulation as 100%. Further, the unit of the volume V and $\Delta V$ is l.

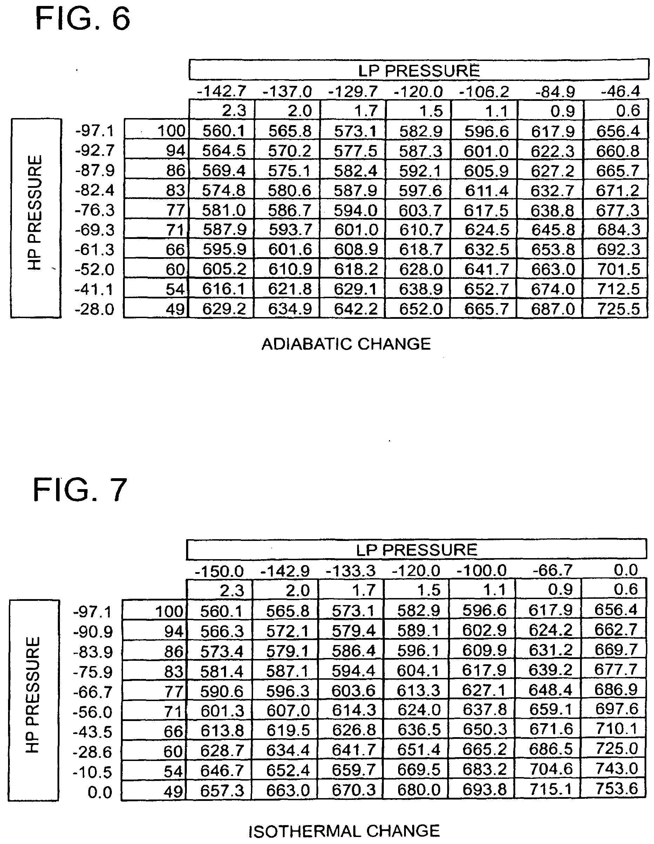

FIG.6 is a table representing a relationship, in the case of adiabatic change, between the pressure of the gas and the amount of the operating oil in the tank. This table shows the amount of the operating oil in the oil tank 15 corresponding to the values of the adiabatic change in the high pressure accumulator 18 shown in FIG.4 and the values of the adiabatic change in the low pressure accumulator 19 shown in FIG.5. The amount of the operating oil in the oil tank 15 is a value obtained by adding the change in volume of the gas in the high pressure accumulator 18 and the change in volume of the gas in the low pressure accumulator 19 to the standard volume of the oil tank 15, Va.

FIG.7 is a table representing a relationship, in the case of isothermal change, between the pressure of the gas and the amount of the operating oil in the tank. This table shows the amount of the operating oil in the oil tank 15 corresponding to the values of the adiabatic change in the high pressure accumulator 18 shown in FIG.4 and the values of the adiabatic change in the low pressure accumulator 19 shown in FIG.5. The amount of the operating oil in the oil tank 15 is a value obtained by adding the change in volume of the gas in the high pressure accumulator 18 and the change in volume of the gas in the low pressure accumulator 19 to the standard volume of the oil tank 15, Va.

In FIG.6 and Fig.7, the pressures P of the accumulator are all relative pressures relative to the pressure of the high pressure accumulator 19 during accumulation as 100%. Further, HP pressure indicates the pressure of the gas in the high pressure accumulator 18 and its values are shown in the first column. Further, the values shown outside the box are the change in volume of the gas in the high pressure accumulator 18 and the change in volume of the gas in the low pressure accumulator 19. Other values indicate amounts of the operating oil in the oil tank 15.

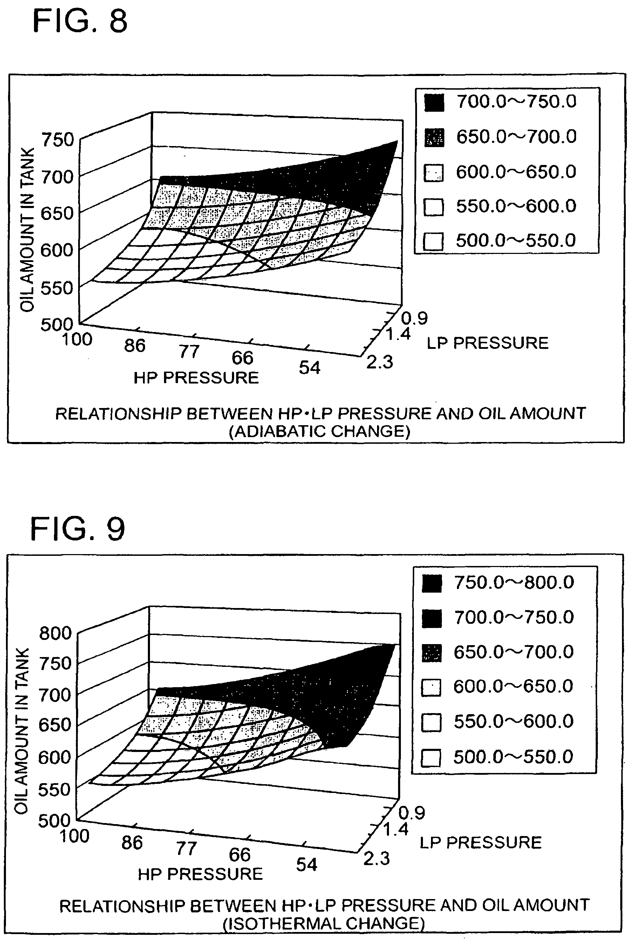

FIG.8 is a three-dimensional graph of the adiabatic change of FIG.6. FIG.9 is a three-dimensional graph of the isothermal change of FIG.7. It is determined that there is no leak of the operating oil when the amount of the operating oil in the oil tank 15 falls between the three-dimensional graph of the adiabatic change and the three-dimensional graph of the isothermal change.

As described above, the amount of the operating oil in the oil tank in absence of oil leak can be calculated with respect to the pressure of the gas in the accumulator (the change in volume of the gas). Thus, it is preferable to determine the threshold value based on the amount of the operating oil in the oil tank. At least some of the relationships shown in FIG.6 to FIG.9 and the threshold values based on this, may be stored beforehand in a memory unit 34 of the processing unit 30. As a result, it takes less time to perform calculation in the processing unit 30 and the oil leak is detected promptly.

Moreover, if there is leak of the operating oil, the amount of the operating oil in the oil tank 15 changes in a declining direction. Thus, the threshold value may be set based on the lower limit which is the amount of the operating oil in the oil tank 15 in the case where the gas changes isothermally, as shown in FIG.9.

In the case where a plurality of the accumulators 18, 19 are provided, the threshold value is determined based on a sum of the change in volume of the gas chambers 18a, 19a of the accumulators 18, 19 calculated from the pressures of gas in the gas chambers 18a, 19a, respectively.

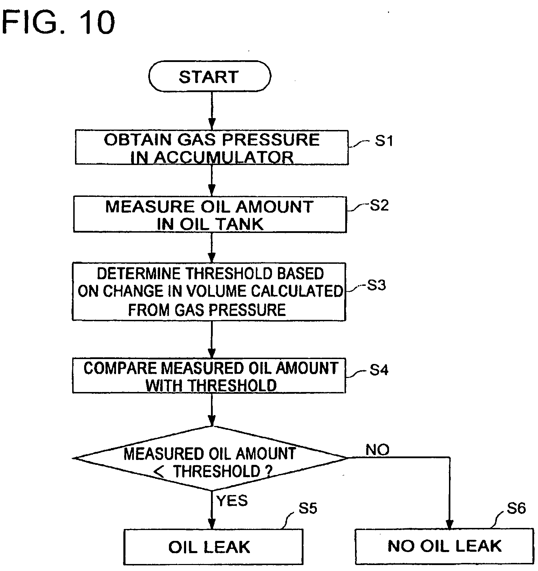

The method of detecting the oil leak of the wind turbine generator 1 by means of the processing unit 30 is described in reference to FIG.10.

First, the pressure of the gas in the accumulator 18, 19 is obtained by the pressure sensor 22, 23 in step S1, and also the amount of the operating oil in the oil tank 15 is measured by the fluid-level sensor 21 in step S2.

Next, in step S3, the threshold value of the amount of the operating oil in the oil tank 15 is determined by the threshold determination unit 31 based on the change in volume of the gas chamber 18a, 19a calculated from the pressure of the gas obtained in step S1.

In step S4, the threshold value determined in the step S3 is compared in the comparison unit 32 with the amount of the operating oil in the oil tank 15 measured in step S2. Then, the comparison result is inputted to the leak determination unit 33. In the leak determination unit 33, if the amount of the operating oil in the oil tank 15 is smaller than the threshold value, it is determined in step S5 that there is leak of the operating oil. If the amount of the operating oil in the oil tank 15 is not smaller than the threshold value, it is determined in step S6 that there is no leak of the operating oil.

As described above, in this embodiment, the leak of the operating oil is detected based on the relationship between the change in volume of the gas in the gas chamber 18a, 19a of the accumulator 18, 19 and the amount of the operating oil in the oil tank 15. Thus, the leak of the operating oil can be accurately detected. Particularly, when there is small leak of the operating oil, an amount of the leaking operating oil is reflected on the difference between the measured amount of the operating oil and the threshold value and thus the oil leak can be surely detected.

In the above embodiment, the processing unit 30 may be provided with a correction unit 35 for correcting one of the threshold value or the measured amount of the operating oil in the oil tank 15 based on the temperature of the operating oil. In this case, temperature sensors 24, 25 are provided to measure temperatures of the operating oil in the high pressure oil line 11 and the low pressure oil line 12 and the temperatures measured by the temperature sensors 24, 25 are inputted to the correction unit 35. In the correction unit 35, one of the threshold value or the measured amount of the operating oil in the oil tank 15 based on the temperatures of the operating oil measured by the temperature sensors 24, 25 and in the comparison unit 33, the one of the threshold value or the measured amount that has been corrected by the correction unit 35 with the other of the threshold value or the measured amount. This makes it possible to detect leak of the operating oil with high accuracy in accordance with change in the gas temperature resulting from the change in the temperature of the operating oil.

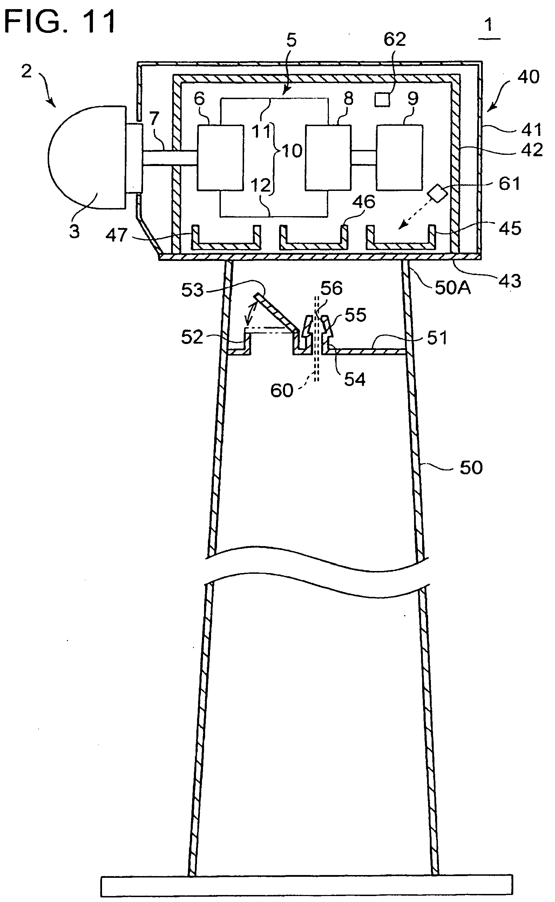

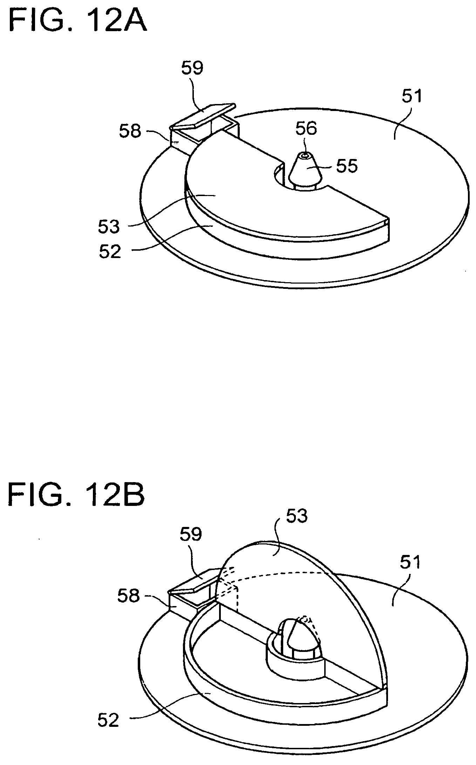

In FIG.11, FIG.12A and FIG.12B, modified examples of the wind turbine generator according to this embodiment are illustrated. FIG. 11 is an illustration of a modified version of the wind turbine generator. FIG.12A is an illustration of an oil-receiving floor in a covered state. FIG.12B is an illustration of the oil-receiving floor in an open state.

The wind turbine generator 1 according to this modified version is provided with the hydraulic transmission and the generator 9 that are arranged in a nacelle 40. The hydraulic transmission 5 includes the hydraulic pump 6, the hydraulic motor 8 and the circulation path 10. The nacelle 40 is supported by an upper end 50A of the tower 50 rotatably in a yawing direction. The nacelle 40 includes a frame 42 forming an interior space of the nacelle 40, a floor plate 43 arranged at a bottom of the frame 42 and a nacelle cover 41 attached to surround the frame 42.

Under at least one of the hydraulic pump 6, the hydraulic motor 8 or the circulation path 10. oil pans 45 to 47 are provided. The oil pans 45 to 47 are configured to receive oil in the case where there is oil leak.

Further, in this modified version, in addition to the oil leak detection by detecting the amount of the operating oil in the oil tank 15, an imaging camera 61 is provided as an auxiliary means for detecting oil leak. The imaging camera 61 is attached to the nacelle 40 and configured to take an image of at least one of the hydraulic pump 6. the hydraulic motor 8, the circulation path 10 or the oil pan 45 to 47. The image is then inputted to the leak determination unit 33 (see FIG.1) and leak of the operating oil is determined in the leak determination unit 33 based on the image. The leak determination unit 33 may be arranged in a remote site. In this case, the taken image is sent to the leak determination unit 33 by a communication unit. By using the imaging camera 61 as well, it is possible to improve reliability of the oil leak detection. Further, it is possible to determine a site of the oil leak using the image taken by the imaging camera 61.

Further, the imaging camera 61 may be an infrared sensor for taking an infrared image. In this case, the leak determination unit 33 determines the leak of the operating oil based on the temperature distribution of the infrared image. Thus, it is easy to locate a high temperature spot based on the temperature distribution of the infrared image taken by the infrared sensor and the leak of the operating oil can be detected easily and promptly.

Furthermore, the wind turbine generator 1 may be provided with an oil-receiving floor 51 in an interior space on the upper end 50A side of the tower 50. In the oil-receiving floor 51, openings are formed, such as an opening 52 for lifting and lowering devices, an opening 58 for operators to move through, and an opening 56 for guiding through cables 60 extending from the nacelle 40 toward a lower part of the tower 50. The openings 52, 58 are closable by means of covers 53, 59. The opening 56 for guiding the cables 60 through cannot be completely closed and thus a cover 56 of a conical shape which increases in diameter downward from a top end of the opening 56 may be provided so that when, the operating oil drops from above, the operating oil does not descend to a lower floor.

While the embodiment of the present invention has been described, it is obvious to those skilled in the art that various changes may be made or the above embodiment may be combined without departing from the scope of the invention.

For instance, in the above embodiment, the imaging camera 61 is used to take an image of the oil pan 46 as an auxiliary oil leak detection unit in addition to the oil leak detection using the measured amount of the operating oil in the oil tank. However, this is not limitative and an odor sensor 62 may be provided as another auxiliary oil leak detection unit. The odor sensor 62 is a sensor for detecting odor in the interior space of the nacelle 40. The odor detection result of the sensor 62 is inputted to the leak determination unit 33. In the leak determination unit 33, leak of the operating oil is determined based on the odor detection result. Further, a threshold value of the odor may be set in advance so as to determine there is leak of the operating oil when the detected odor is greater than the threshold value.

As yet another auxiliary oil leak detection unit, an optical fiber may be used, which changes in light amount when fluid adheres to the optical fiber. The optical fiber is arranged in periphery of at least one of the hydraulic pump 6, the hydraulic motor 8, the circulation path 10 or the accumulator 18, 19. The amount of light having passed through the optical fiber is measured. The light measurement result is inputted to the leak determination unit 33. In the leak determination unit 33, leak of the operating oil is determined based on the change in light amount. Further, a threshold value of the change in the light amount may be set in advance so as to determine that there is leak of the operating oil when the detected change in the light amount is greater than the threshold value.

[Reference Signs list]

| 1 | WIND TURBINE GENERATOR |
|---|---|
| 2 | ROTOR |
| 3 | HUB |
| 4 | BLADE |
| 5 | HYDRAULIC TRANSMISSION |
| 6 | HYDRAULIC PUMP |
| 7 | ROTATION SHAFT |
| 8 | HYDRAULIC MOTOR |
| 9 | GENERATOR |
| 10 | CIRCULATION PATH |
| 11 | HIGH PRESSURE OIL LINE |
| 12 | LOW PRESSURE OIL LINE |
| 13 | RETURN LINE |
| 14 | REPLENISHING LINE |
| 15 | OIL TANK |
| 16 | BOOST PUMP |
| 17 | OIL FILTER |
| 18 | HIGH PRESSURE ACCUMULATOR |
| 18a | GAS CHAMBER |
| 18b | OIL CHAMBER |
| 18c | DIAPHRAGM |
| 19 | LOW PRESSURE ACCUMULATOR |
| 19a | GAS CHAMBER |
| 19b | OIL CHAMBER |
| 19c | DIAPHRAGM |
| 21 | FLUID-LEVEL SENSOR |
| 22, 23 | PRESSURE SENSOR |
| 24, 25 | TEMPERATURE SENSOR |
| 30 | PROCESSING UNIT |
| 31 | THRESHOLD DETERMINATION UNIT |

32    COMPARISON UNIT
33    LEAK DETERMINATION UNIT
34    MEMORY UNIT
35    CORRECTION UNIT

**Claims**

1.  A power generating apparatus (1) of renewable energy type for generating power utilizing renewable energy, comprising:

    a rotation shaft (7) configured to be driven by the renewable energy;
    a hydraulic pump (6) configured to be driven by rotation of the rotation shaft (7) so as to pressurize operating oil;
    a hydraulic motor (8) configured to be driven by the operating oil pressurized by the hydraulic pump (6);
    a generator (9) connected to the hydraulic motor (8);
    a closed-cycle circulation path (10) through which the operating oil is circulated between the hydraulic pump and the hydraulic motor, wherein the hydraulic pump (6), the hydraulic motor (8) and the circulation path (10) are arranged in a nacelle (40),
    an accumulator comprising: an oil chamber (18b) in communication with the circulation path (10); a gas chamber (18a) containing gas in a hermetically sealed manner;
    an oil tank (15) provided in the circulation path to store the operating oil;
    a gas-pressure obtaining unit (22) for obtaining a pressure of the gas in the gas chamber (18a);
    **characterized in that** it further comprises:

        an oil-amount measuring unit (21) for measuring an amount of the operating oil in the oil tank (15);
        a threshold determination unit (31) for determining a threshold value based on change in volume of the gas chamber (18a) which is calculated from the pressure of the gas obtained by the gas-pressure obtaining unit (22);
        a comparison unit (32) for comparing the threshold value with the amount of the operating oil measured by the oil-amount measuring unit (21); and
        a leak determination unit (33) for determining leak of the operating oil based on a comparison result of the comparison unit (32);
        wherein the accumulator comprises a deformable diaphragm (18c) separating the oil chamber and the gas chamber; and
        wherein the threshold value is set within a range of $0.85V_0$ to $1.04V_0$ where $V_0$ is the amount of the operating oil in the oil tank (15) calculated from the change in volume of the gas chamber (18a) in a case where the gas changes isothermally, or $V_0$ is the amount of the operating oil in the oil tank (15) calculated from the change in volume of the gas chamber (18a) in a case where a state of the gas changes in a range of a polytropic index expected when the gas changes polytropically,
        **in that** the apparatus further comprises an odor sensor (62) provided in an interior space of the nacelle (40) and configured to detect odor of the operating oil, or further comprises an oil receiver (45, 46, 47) and an imaging camera (61) for taking an image of at least one of the hydraulic pump, the hydraulic motor, the circulation path, or the oil receiver, the oil receiver being arranged under at least one of the hydraulic pump (6), the hydraulic motor (8) or the circulation path (10),
        and **in that** the leak determination unit (33) is configured to determine the leak of the operating oil based on the comparison result and respectively the odor detected by the odor sensor (62) or the image taken by the imaging camera (61).

2.  The power generating apparatus (1) of renewable energy type according to claim 1,
    wherein a plurality of the accumulators (18, 19) is connected to the circulation path (10), and
    wherein the threshold determination unit (31) is configured to determine the threshold value based on a sum of the change in volume of a plurality of the gas chambers (18a, 19a) of the plurality of accumulators calculated from the pressure of gas in the plurality of the gas chambers of the plurality of accumulators, respectively.

3.  The power generating apparatus (1) of renewable energy type according to claim 2, wherein the circulation path (10) includes:

    a high pressure oil line (11) provided between an outlet of the hydraulic pump (6) and an inlet of the hydraulic motor (8); and
    a low pressure oil line (12) provided between an outlet of the hydraulic motor (8) and an inlet of the hydraulic pump (6), and

    wherein the plurality of the accumulators includes:

        a high pressure accumulator (18) whose oil chamber (18b) is connected to the high pressure oil line (11); and

a low pressure accumulator (19) whose oil chamber (19b) is connected to the low pressure oil line (12).

4. The power generating apparatus (1) of renewable energy type according to any one of claims 1 to 3, further comprising:

a temperature sensor (24, 25) for measuring a temperature of the operating oil; and
a correction unit (35) for correcting one of the threshold value or the measured amount of the operating oil based on the temperature of the operating oil measured by the temperature sensor,

wherein the comparison unit is configured to compare said one of the threshold value or the measured amount that has been corrected by the correction unit with the other of the threshold value or the measured amount.

5. The power generating apparatus (1) of renewable energy type according to any one of claims 1 to 4, further comprising:

a memory unit (34) for storing a relationship between the pressure of the gas in the gas chamber and an estimated amount of the operating oil in the oil tank that is estimated from the change in volume of the gas chamber at said pressure; and
a calculation unit for calculating the threshold value by applying to the stored relationship the pressure of the gas obtained by the gas-pressure obtaining unit.

6. The power generating apparatus (1) of renewable energy type according to any one of claims 1 to 5, wherein the imaging camera (61) is an infrared sensor for taking an infrared image, and
wherein the leak determination unit (33) is configured to determine the leak of the operating oil based on the comparison result and temperature distribution of the infrared image.

7. The power generating apparatus (1) of renewable energy type according to any one of claims 1 to 6, further comprising:

an optical fiber arranged in periphery of at least one of the hydraulic pump, the hydraulic motor, the circulation path or the accumulator, the optical fiber changing in light amount when fluid adheres to the optical fiber,
wherein the leak determination unit (33) is configured to determine the leak of the operating oil based on the comparison result and change in the light amount of the optical fiber.

8. The power generating apparatus (1) of renewable energy type according to claim 1,
wherein the power generating apparatus (1) further comprises an oil-receiving floor (51) provided in an upper space of a tower (50) which supports the nacelle (40) and configured to receive the operating oil leaking from a nacelle side toward a tower side, the oil-receiving floor (51) having a through-hole (52) that is closable.

9. A method for detecting oil leak of a power generating apparatus (1) of renewable energy type comprising: a rotation shaft (7) configured to be driven by the renewable energy; a hydraulic pump (6) configured to be driven by rotation of the rotation shaft to pressurize operating oil; a hydraulic motor (8) configured to be driven by the operating oil pressurized by the hydraulic pump; a generator (9) connected to the hydraulic motor; a closed-cycle circulation path (10) through which the operating oil is circulated between the hydraulic pump (6) and the hydraulic motor (8), wherein the hydraulic pump (6), the hydraulic motor (8) and the circulation path (10) are arranged in a nacelle (40); an accumulator (18) comprising an oil chamber (18b) in communication with the circulation path (10), a gas chamber (18a) containing gas in a hermetically sealed manner, a deformable diaphragm (18c) separating the oil chamber and the gas chamber; and an oil tank (15) provided in the circulation path (10) to store the operating oil, the method comprising:

a pressure obtaining step (51) of obtaining a pressure of the gas in the gas chamber of the accumulator; **characterized in that** the method further comprises:
a measuring step (52) of measuring an amount of the operating oil in the oil tank;
a threshold determining step (53) of determining a threshold value based on change in volume of the gas chamber calculated from the pressure of the gas obtained in the pressure obtaining step;
a comparing step (54) of comparing the threshold value determined in the threshold determining step with the amount of the operating oil measured in the measuring step; and
a leak determining step (55, 56) of determining leak of the operating oil based on comparison result in the comparing step,
wherein the threshold value is set within a range of $0.85V_0$ to $1.04V_0$ where $V_0$ is the amount of the operating oil in the oil tank (15) calculated from the change in volume of the gas chamber (18a) in a case where the gas changes isothermally, or $V_0$ is the amount of the operating oil in the oil tank (15) calculated from the change in volume of the gas chamber (18a) in a case where a state of the gas changes in a range of a polytropic index expected when the gas changes polytropically,

and **in that**, in the leak determining step, the leak of the operating oil is determined based on the comparison result of the odor of the operating oil detected by an odor sensor (62) provided in the nacelle (40), and/or an image taken by an imaging camera (61) provided to take an image of at least one of the hydraulic pump, the hydraulic motor, the circulation path, or the oil receiver.

10. The method of detecting the oil leak according to claim 9,
wherein the imaging camera (61) is an infrared sensor for taking an infrared image, and
wherein, in the leak determining step, the leak of the operating oil is determined based on the comparison result and temperature distribution of the infrared image.

11. The power generating apparatus (1) of renewable energy type according to any one of claims 1 to 8,
wherein the power generating apparatus of renewable energy type is a wind turbine generator for generating power from wind in a form of the renewable energy.

**Patentansprüche**

1. Stromerzeugungsvorrichtung (1) vom erneuerbaren Energietyp zum Erzeugen von Strom durch Nutzung erneuerbarer Energie, umfassend:

eine Drehwelle (7), die dazu ausgebildet ist, durch die erneuerbare Energie angetrieben zu werden,
eine Hydraulikpumpe (6), die dazu ausgebildet ist, durch Drehung der Drehwelle (7) angetrieben zu werden, um Betriebsöl mit Druck zu beaufschlagen,
einen Hydraulikmotor (8), der dazu ausgebildet ist, durch das Betriebsöl, welches durch die Hydraulikpumpe (6) mit Druck beaufschlagt wird, angetrieben zu werden,
einen Generator (9), der mit dem Hydraulikmotor (8) verbunden ist,
einen geschlossenen Zirkulationsweg (10), durch den das Betriebsöl zwischen der Hydraulikpumpe und dem Hydraulikmotor umgewälzt wird, wobei die Hydraulikpumpe (6), der Hydraulikmotor (8) und der Zirkulationsweg (10) in einer Gondel (40) angeordnet sind,
einen Speicher, umfassend: eine Ölkammer (18b) in Kommunikation mit dem Zirkulationsweg (10), eine Gaskammer (18a), die auf hermetisch abgeschlossene Weise Gas enthält,
einen Öltank (15), der in dem Zirkulationsweg vorgesehen ist, um das Betriebsöl aufzubewahren,
eine Gasdruckerhaltungseinheit (22) zum Erhalten eines Drucks des Gases in der Gaskammer (18a), **dadurch gekennzeichnet, dass** sie ferner umfasst:

eine Ölmengenmesseinheit (21) zum Messen einer Menge des Betriebsöls in dem Öltank (15),
eine Schwellenbestimmungseinheit (31) zum Bestimmen eines Schwellenwerts basierend auf einer Änderung des Volumens der Gaskammer (18a), welche aus dem Druck des Gases, der durch die Gasdruckerhaltungseinheit (22) erhalten wird, berechnet wird,
eine Vergleichseinheit (32) zum Vergleichen des Schwellenwerts mit der Menge des durch die Ölmengenmesseinheit (21) gemessenen Betriebsöls und
eine Leckbestimmungseinheit (33) zum Bestimmen des Austretens des Betriebsöls basierend auf einem Vergleichsresultat der Vergleichseinheit (32),
wobei der Speicher eine verformbare Membran (18c) umfasst, welche die Ölkammer und die Gaskammer trennt, und
wobei der Schwellenwert innerhalb eines Bereichs von $0,85V_0$ bis $1,04V_0$ eingestellt wird, wobei, in einem Fall, in dem sich das Gas isotherm ändert, $V_0$ die Menge des Betriebsöls in dem Öltank (15) ist, die aus der Änderung des Volumens der Gaskammer (18a) berechnet wird, oder in einem Fall, in dem sich ein Zustand des Gases in einem Bereich eines polytropen Index ändert, der erwartet wird, wenn sich das Gas polytrop ändert, $V_0$ die Menge des Betriebsöls in dem Öltank (15) ist, die aus der Änderung des Volumens der Gaskammer (18a) berechnet wird,
dadurch, dass die Vorrichtung ferner einen Geruchssensor (62) umfasst, der in einem Innenraum der Gondel (40) vorgesehen ist und dazu ausgebildet ist, den Geruch des Betriebsöls zu detektieren, oder ferner eine Ölaufnahmevorrichtung (45, 46, 47) und eine Bildaufnahmekamera (61) zum Aufnehmen eines Bildes von mindestens einem aus der Gruppe umfassend die Hydraulikpumpe, den Hydraulikmotor, den Zirkulationsweg oder die Ölaufnahmevorrichtung umfasst, wobei die Ölaufnahmevorrichtung unter mindestens einem aus der Gruppe umfassend die Hydraulikpumpe (6), den Hydraulikmotor (8) oder den Zirkulationsweg (10) angeordnet ist,
und dadurch, dass die Leckbestimmungseinheit (33) dazu ausgebildet ist, das Austreten des Betriebsöls basierend auf dem Vergleichsresultat und entsprechend dem Geruch, der durch den Geruchssensor (62) detektiert wird, oder dem Bild, das durch die Bildaufnahmekamera (61) aufgenommen wird, zu bestimmen.

2. Stromerzeugungsvorrichtung (1) vom erneuerbaren Energietyp nach Anspruch 1,
wobei mehrere Speicher (18, 19) mit dem Zirkulationsweg (10) verbunden sind, und
wobei die Schwellenbestimmungseinheit (31) dazu ausgebildet ist, den Schwellenwert basierend auf einer Summe der Änderungen des Volumens von mehreren Gaskammern (18a, 19a) der mehreren Speicher zu bestimmen, die jeweils aus dem Druck von Gas in den mehreren Gaskammern der mehreren Speicher berechnet werden.

3. Stromerzeugungsvorrichtung (1) vom erneuerbaren Energietyp nach Anspruch 2,
wobei der Zirkulationsweg (10) umfasst:

eine Hochdruckölleitung (11), die zwischen einem Auslass der Hydraulikpumpe (6) und einem Einlass des Hydraulikmotors (8) vorgesehen ist, und
eine Niederdruckölleitung (12), die zwischen einem Auslass des Hydraulikmotors (8) und einem Einlass der Hydraulikpumpe (6) vorgesehen ist, und

wobei die mehreren Speicher umfassen:

einen Hochdruckspeicher (18), dessen Ölkammer (18b) mit der Hochdruckölleitung (11) verbunden ist, und
einen Niederdruckspeicher (19), dessen Ölkammer (19b) mit der Niederdruckölleitung (12) verbunden ist.

4. Stromerzeugungsvorrichtung (1) vom erneuerbaren Energietyp nach einem beliebigen der Ansprüche 1 bis 3, ferner umfassend:

einen Temperatursensor (24, 25) zum Messen einer Temperatur des Betriebsöls, und
eine Korrektureinheit (35) zum Korrigieren von einem aus der Gruppe umfassend den Schwellenwert und die gemessene Menge des Betriebsöls basierend auf der durch den Temperatursensor gemessenen Temperatur des Betriebsöls,

wobei die Vergleichseinheit dazu ausgebildet ist, den einen aus der Gruppe umfassend den Schwellenwert und die gemessene Menge, der durch die Korrektureinheit korrigiert wurde, mit dem jeweils anderen aus der Gruppe umfassend den Schwellenwert und die gemessene Menge zu vergleichen.

5. Stromerzeugungsvorrichtung (1) vom erneuerbaren Energietyp nach einem beliebigen der Ansprüche 1 bis 4, ferner umfassend:

eine Speichereinheit (34) zum Speichern einer Beziehung zwischen dem Druck des Gases in der Gaskammer und einer geschätzten Menge des Betriebsöls in dem Öltank, die aus der Änderung des Volumens der Gaskammer bei dem Druck geschätzt wird, und
eine Berechnungseinheit zum Berechnen des Schwellenwerts durch Anwenden des Drucks des Gases, der durch die Gasdruckerhaltungseinheit erhalten wird, auf die gespeicherte Beziehung.

6. Stromerzeugungsvorrichtung (1) vom erneuerbaren Energietyp nach einem beliebigen der Ansprüche 1 bis 5,
wobei die Bildaufnahmekamera (61) ein Infrarotsensor zum Aufnehmen eines Infrarotbilds ist, und
wobei die Leckbestimmungseinheit (33) dazu ausgebildet ist, das Austreten des Betriebsöls basierend auf dem Vergleichsergebnis und der Temperaturverteilung des Infrarotbildes zu bestimmen.

7. Stromerzeugungsvorrichtung (1) vom erneuerbaren Energietyp nach einem beliebigen der Ansprüche 1 bis 6, ferner umfassend:

eine optische Faser, die am Umfang von mindestens einem aus der Gruppe umfassend die Hydraulikpumpe, den Hydraulikmotor, den Zirkulationsweg und den Speicher angeordnet ist, wobei es, wenn Fluid an der optischen Faser anhaftet, zu einer Änderung der Lichtmenge der optischen Faser kommt,

wobei die Leckbestimmungseinheit (33) dazu ausgebildet ist, das Austreten des Betriebsöls basierend auf dem Vergleichsresultat und einer Änderung der Lichtmenge der optischen Faser zu bestimmen.

8. Stromerzeugungsvorrichtung (1) vom erneuerbaren Energietyp nach Anspruch 1,
wobei die Stromerzeugungsvorrichtung (1) ferner einen ölaufnehmenden Boden (51) umfasst, der in einem oberen Raum eines Turms (50), der die Gondel (40) trägt, vorgesehen und dazu ausgebildet ist, das Betriebsöl aufzunehmen, das von einer Gondelseite in Richtung einer Turmseite austritt, wobei der ölaufnehmende Boden (51) ein Durchgangsloch (52) aufweist, welches verschließbar ist.

9. Verfahren zum Detektieren eines Öllecks einer Stromerzeugungsvorrichtung (1) vom erneuerbaren Energietyp, welche umfasst: eine Drehwelle (7), die dazu ausgebildet ist, durch die erneuerbare Energie angetrieben zu werden, eine Hydraulikpumpe (6), die dazu ausgebildet ist, durch Drehung der Drehwelle angetrieben zu werden, um Betriebsöl mit Druck zu beaufschlagen, einen Hydraulikmotor (8), der dazu ausgebildet ist, durch das Betriebsöl, welches durch die Hydraulikpumpe (6) mit Druck beaufschlagt wird, angetrieben zu werden, einen Generator (9), der mit dem Hydraulikmotor (8) verbunden ist; einen geschlossenen Zirkulationsweg (10), durch den das Betriebsöl zwischen der Hydraulikpumpe und dem Hydraulikmotor umgewälzt wird, wobei die Hydraulikpumpe (6), der Hydraulikmotor (8) und der Zirkulationsweg (10) in einer Gondel (40) angeordnet sind, einen Speicher (18), umfassend eine Ölkammer (18b) in Kommunikation mit dem Zirkulationsweg (10), eine Gaskammer (18a), die auf hermetisch abgeschlossene Weise Gas enthält, eine verformbare Membran (18c), welche die Ölkammer und die Gaskammer trennt; und einen Öltank (15), der in dem Zirkulationsweg (10) vorgesehen ist, um das Betriebsöl aufzubewahren, wobei das Verfahren umfasst:

einen Druckerhaltungsschritt (51) des Erhaltens eines Drucks des Gases in der Gaskammer des Speichers, **dadurch gekennzeichnet, dass** das Verfahren ferner umfasst:

einen Messschritt (52) des Messens einer Menge des Betriebsöls in dem Öltank, einen Schwellenbestimmungsschritt (53) des Bestimmens eines Schwellenwerts basierend auf einer Änderung des Volumens der Gaskammer, die aus dem Druck des Gases berechnet wird, der in dem Druckerhaltungsschritt erhalten wird, einen Vergleichsschritt (54) des Vergleichens des Schwellenwerts, der in dem Schwellenbestimmungsschritt bestimmt wird, mit der Menge des Betriebsöls, die in dem Messschritt gemessen wird, und einen Leckbestimmungsschritt (55, 56) des Bestimmens des Austretens des Betriebsöls basierend auf dem Vergleichsresultat in dem Vergleichsschritt, wobei der Schwellenwert innerhalb eines Bereichs von $0{,}85V_0$ bis $1{,}04V_0$ eingestellt wird, wobei, in einem Fall, in dem sich das Gas isotherm ändert, $V_0$ die Menge des Be-

triebsöls in dem Öltank (15) ist, die aus der Änderung des Volumens der Gaskammer (18a) berechnet wird, oder in einem Fall, in dem sich ein Zustand des Gases in einem Bereich eines polytropen Index ändert, der erwartet wird, wenn sich das Gas polytrop ändert, $V_0$ die Menge des Betriebsöls in dem Öltank (15) ist, die aus der Änderung des Volumens der Gaskammer (18a) berechnet wird, und dadurch, dass in dem Leckbestimmungsschritt das Austreten des Betriebsöls basierend auf dem Vergleichsresultat des Geruchs des Betriebsöls, der durch einen Geruchssensor (62) detektiert wird, der in der Gondel (40) vorgesehen ist, und/oder einem Bild, das durch eine Bildaufnahmekamera (61) aufgenommen wird, die vorgesehen ist, um ein Bild von mindestens einem aus der Gruppe umfassend die Hydraulikpumpe, den Hydraulikmotor, den Zirkulationsweg und die Ölaufnahmevorrichtung zu erfassen.

10. Verfahren zum Detektieren des Öllecks nach Anspruch 9, wobei die Bildaufnahmekamera (61) ein Infrarotsensor zum Aufnehmen eines Infrarotbildes ist, und wobei in dem Leckbestimmungsschritt das Austreten des Betriebsöls basierend auf dem Vergleichsresultat und der Temperaturverteilung des Infrarotbildes bestimmt wird.

11. Stromerzeugungsvorrichtung (1) vom erneuerbaren Energietyp nach einem beliebigen der Ansprüche 1 bis 8, wobei die Stromerzeugungsvorrichtung vom erneuerbaren Energietyp eine Windkraftanlage zum Erzeugen von Strom aus Wind als erneuerbare Energieform ist.

**Revendications**

1. Appareil de génération d'énergie (1) du type à énergie renouvelable pour générer de l'énergie en utilisant une énergie renouvelable, comprenant :

un arbre rotatif (7) configuré pour être entraîné par l'énergie renouvelable ;
une pompe hydraulique (6) configurée pour être entraînée par la rotation de l'arbre rotatif (7) de manière à mettre sous pression de l'huile de fonctionnement ;
un moteur hydraulique (8) configuré pour être entraîné par l'huile de fonctionnement mise sous pression par la pompe hydraulique (6) ;
une génératrice (9) reliée au moteur hydraulique (8) ;

un trajet de circulation en cycle fermé (10) à travers lequel l'huile de fonctionnement circule entre la pompe hydraulique et le moteur hydraulique, dans lequel la pompe hydraulique (6), le moteur hydraulique (8) et le trajet de circulation (10) sont agencés dans une nacelle (40),

un accumulateur comprenant : une chambre d'huile (18b) en communication avec le trajet de circulation (10) ; une chambre de gaz (18a) contenant du gaz d'une manière hermétique ;

un réservoir d'huile (15) prévu dans le trajet de circulation pour stocker l'huile de fonctionnement ;

une unité d'obtention de pression de gaz (22) pour obtenir une pression du gaz dans la chambre de gaz (18a) ; **caractérisé en ce qu'**il comprend en outre :

une unité de mesure de quantité d'huile (21) pour mesurer une quantité de l'huile de fonctionnement dans le réservoir d'huile (15) ;

une unité de détermination de seuil (31) pour déterminer une valeur de seuil sur la base du changement de volume de la chambre de gaz (18a) qui est calculé à partir de la pression du gaz obtenue par l'unité d'obtention de pression de gaz (22) ;

une unité de comparaison (32) pour comparer la valeur de seuil avec la quantité de l'huile de fonctionnement mesurée par l'unité de mesure de quantité d'huile (21) ; et

une unité de détermination de fuite (33) pour déterminer une fuite de l'huile de fonctionnement sur la base du résultat de comparaison de l'unité de comparaison (32) ;

dans lequel l'accumulateur comprend une membrane déformable (18c) séparant la chambre d'huile et la chambre de gaz : et dans lequel la valeur de seuil est fixée dans une plage de 0,85 $V_0$ à 1,04 $V_0$, où $V_0$ est la quantité de l'huile de fonctionnement dans le réservoir d'huile (15) calculée à partir du changement de volume de la chambre de gaz (18a) dans un cas dans lequel le gaz change de manière isotherme, ou $V_0$ est la quantité de l'huile de fonctionnement dans le réservoir d'huile (15) calculée à partir du changement de volume de la chambre de gaz (18a) dans un cas dans lequel un état du gaz change dans une plage d'un indice polytropique attendu lorsque le gaz change de manière polytropique,

**en ce que** l'appareil comprend en outre un capteur d'odeur (62) prévu dans un espace intérieur de la nacelle (40) et configuré pour détecter l'odeur de l'huile de fonctionnement, ou comprend en outre un récepteur d'huile (45, 46, 47) et un appareil de prise d'image (61) pour prendre une image d'au moins l'un de la pompe hydraulique, du moteur hydraulique, du trajet de circulation, ou du récepteur d'huile, le récepteur d'huile étant agencé sous au moins l'un de la pompe hydraulique (6), du moteur hydraulique (8) ou du trajet de circulation (10),

et **en ce que** l'unité de détermination de fuite (33) est configurée pour déterminer la fuite de l'huile de fonctionnement sur la base du résultat de comparaison et respectivement de l'odeur détectée par le capteur d'odeur (62) ou de l'image prise par l'appareil de prise d'image (61).

**2.** Appareil de génération d'énergie (1) du type à énergie renouvelable selon la revendication 1, dans lequel une pluralité des accumulateurs (18, 19) sont reliés au trajet de circulation (10), et dans lequel l'unité de détermination de seuil (31) est configurée pour déterminer la valeur de seuil sur la base d'une somme des changements de volume d'une pluralité des chambres de gaz (18a, 19a) de la pluralité d'accumulateurs calculés à partir de la pression de gaz dans la pluralité des chambres de gaz de la pluralité d'accumulateurs, respectivement.

**3.** Appareil de génération d'énergie (1) du type à énergie renouvelable selon la revendication 2, dans lequel le trajet de circulation (10) comprend . une conduite d'huile à haute pression (11) prévue entre une sortie de la pompe hydraulique (6) et une entrée du moteur hydraulique (8) ; et une conduite d'huile à basse pression (12) prévue entre une sortie du moteur hydraulique (8) et une entrée de la pompe hydraulique (6), et dans lequel la pluralité des accumulateurs comprend :

un accumulateur à haute pression (18) dont la chambre d'huile (18b) est reliée à la conduite d'huile à haute pression (11) ; et

un accumulateur à basse pression (19) dont la chambre d'huile (19b) est reliée à la conduite d'huile à basse pression (12).

**4.** Appareil de génération d'énergie (1) du type à énergie renouvelable selon l'une quelconque des revendications 1 à 3, comprenant en outre :

un capteur de température (24, 25) pour mesurer une température de l'huile de fonctionnement ; et

une unité de correction (35) pour corriger l'une de la valeur de seuil ou de la quantité mesurée de l'huile de fonctionnement sur la base de la température de l'huile de fonctionnement mesurée par le capteur de température,

dans lequel l'unité de comparaison est configurée pour comparer ladite une de la valeur de seuil ou de la quantité mesurée qui a été corrigée par l'unité de correction avec l'autre de la valeur de seuil ou de la quantité mesurée.

5. Appareil de génération d'énergie (1) du type à énergie renouvelable selon l'une quelconque des revendications 1 à 4, comprenant en outre :

une unité de mémorisation (34) pour mémoriser une relation entre la pression du gaz dans la chambre de gaz et une quantité estimée de l'huile de fonctionnement dans le réservoir d'huile qui est estimée à partir du changement de volume de la chambre de gaz à ladite pression ; et une unité de calcul pour calculer la valeur de seuil en appliquant à la relation mémorisée la pression du gaz obtenue par l'unité d'obtention de pression de gaz.

6. Appareil de génération d'énergie (1) du type à énergie renouvelable selon l'une quelconque des revendications 1 à 5,
dans lequel l'appareil de prise d'image (61) est un capteur infrarouge pour prendre une image infrarouge, et
dans lequel l'unité de détermination de fuite (33) est configurée pour déterminer la fuite de l'huile de fonctionnement sur la base du résultat de comparaison et de la répartition des températures de l'image infrarouge.

7. Appareil de génération d'énergie (1) du type à énergie renouvelable selon l'une quelconque des revendications 1 à 6, comprenant en outre :

une fibre optique agencée à la périphérie d'au moins l'un de la pompe hydraulique, du moteur hydraulique, du trajet de circulation ou de l'accumulateur, la fibre optique changeant de quantité de lumière lorsque le fluide adhère à la fibre optique,

dans lequel l'unité de détermination de fuite (33) est configurée pour déterminer la fuite de l'huile de fonctionnement sur la base du résultat de comparaison et du changement de la quantité de lumière de la fibre optique.

8. Appareil de génération d'énergie (1) du type à énergie renouvelable selon la revendication 1,
dans lequel l'appareil de génération d'énergie (1) comprend en outre un étage de réception d'huile (51) prévu dans un espace supérieur d'une tour (50) qui supporte la nacelle (40) et configuré pour recevoir l'huile de fonctionnement fuyant d'un côté de nacelle vers un côté de tour, l'étage de réception d'huile (51) comportant un trou traversant (52) qui peut être fermé.

9. Procédé pour détecter une fuite d'huile d'un appareil de génération d'énergie (1) du type à énergie renouvelable comprenant : un arbre rotatif (7) configuré pour être entraîné par l'énergie renouvelable ; une pompe hydraulique (6) configurée pour être entraînée par la rotation de l'arbre rotatif pour mettre sous pression de l'huile de fonctionnement ; un moteur hydraulique (8) configuré pour être entraîné par l'huile de fonctionnement mise sous pression par la pompe hydraulique ; une génératrice (9) reliée au moteur hydraulique ; un trajet de circulation en cycle fermé (10) à travers lequel l'huile de fonctionnement circule entre la pompe hydraulique (6) et le moteur hydraulique (8), dans lequel la pompe hydraulique (6), le moteur hydraulique (8) et le trajet de circulation (10) sont agencés dans une nacelle (40) ; un accumulateur (18) comprenant une chambre d'huile (18b) en communication avec le trajet de circulation (10), une chambre de gaz (18a) contenant du gaz d'une manière hermétique, une membrane déformable (18c) séparant la chambre d'huile et la chambre de gaz ; et un réservoir d'huile (15) prévu dans le trajet de circulation (10) pour stocker l'huile de fonctionnement, le procédé comprenant :

une étape d'obtention de pression (51) pour obtenir une pression du gaz dans la chambre de gaz de l'accumulateur ; **caractérisé en ce que** le procédé comprend en outre :
une étape de mesure (52) pour mesurer une quantité de l'huile de fonctionnement dans le réservoir d'huile ;
une étape de détermination de seuil (53) pour déterminer une valeur de seuil sur la base d'un changement de volume de la chambre de gaz calculé à partir de la pression du gaz obtenue à l'étape d'obtention de pression ;
une étape de comparaison (54) pour comparer la valeur de seuil déterminée à l'étape de détermination de seuil avec la quantité de l'huile de fonctionnement mesurée à l'étape de mesure ; et
une étape de détermination de fuite (55, 56) pour déterminer une fuite de l'huile de fonctionnement sur la base du résultat de comparaison de l'étape de comparaison,
dans lequel la valeur de seuil est fixée dans une plage de 0,85 $V_0$ à 1,04 $V_0$, où $V_0$ est la quantité de l'huile de fonctionnement dans le réservoir d'huile (15) calculée à partir du changement de volume de la chambre de gaz (18a) dans un cas dans lequel le gaz change de manière isother-

me, ou $V_0$ est la quantité de l'huile de fonctionnement dans le réservoir d'huile (15) calculée à partir du changement de volume de la chambre de gaz (18a) dans un cas dans lequel un état du gaz change dans une plage d'un indice polytropique attendu lorsque le gaz change de manière polytropique,

et **en ce que**, à l'étape de détermination de fuite, la fuite de l'huile de fonctionnement est déterminée sur la base du résultat de comparaison de l'odeur de l'huile de fonctionnement détectée par un capteur d'odeur (62) prévu dans la nacelle (40), et/ou d'une image prise par un appareil de prise d'image (61) prévu pour prendre une image d'au moins l'un de la pompe hydraulique, du moteur hydraulique, du trajet de circulation, ou du récepteur d'huile.

**10.** Procédé de détection de la fuite d'huile selon la revendication 9,

dans lequel l'appareil de prise d'image (61) est un capteur infrarouge pour prendre une image infrarouge, et

dans lequel, à l'étape de détermination de fuite, la fuite de l'huile de fonctionnement est déterminée sur la base du résultat de comparaison et de la répartition des températures de l'image infrarouge.

**11.** Appareil de génération d'énergie (1) du type à énergie renouvelable selon l'une quelconque des revendications 1 à 8,

dans lequel l'appareil de génération d'énergie du type à énergie renouvelable est une éolienne pour générer de l'énergie à partir du vent en une forme de l'énergie renouvelable.

FIG. 1

# FIG. 2

# FIG. 3

# FIG. 4

| | DURING GAS INCLUSION | DURING ACCUMULATION | POLYTROPIC CHANGE DURING DISCHARGE (n=1.405) | | | | | | | | |
|---|---|---|---|---|---|---|---|---|---|---|---|
| P | 51 | 100 | 94 | 86 | 83 | 77 | 71 | 66 | 60 | 54 | 49 |
| V | 200 | 102.9 | 107.3 | 112.1 | 117.6 | 123.7 | 130.7 | 138.7 | 148.0 | 158.9 | 172.0 |
| POLYTROPIC INDEX | | 1.00 | 1.405 | 1.405 | 1.405 | 1.405 | 1.405 | 1.405 | 1.405 | 1.405 | 1.405 |
| ΔV | | -97.1 | -92.7 | -87.9 | -82.4 | -76.3 | -69.3 | -61.3 | -52.0 | -41.1 | -28.0 |

ADIABATIC CHANGE

| | DURING GAS INCLUSION | DURING ACCUMULATION | POLYTROPIC CHANGE DURING DISCHARGE (n=1.00) | | | | | | | |
|---|---|---|---|---|---|---|---|---|---|---|
| P | 51 | 100 | 94 | 86 | 83 | 77 | 71 | 66 | 60 | 54 |
| V | 200 | 102.9 | 109.1 | 116.1 | 124.1 | 133.3 | 144.0 | 156.5 | 171.4 | 189.5 |
| POLYTROPIC INDEX | | 1.00 | 1.00 | 1.00 | 1.00 | 1.00 | 1.00 | 1.00 | 1.00 | 1.00 |
| ΔV | | -97.1 | -90.9 | -83.9 | -75.9 | -66.7 | -56.0 | -43.5 | -28.6 | -10.5 |

ISOTHERMAL CHANGE

EP 2 687 720 B1

# FIG. 5

| | DURING GAS INCLUSION | DURING ACCUMULATION | POLYTROPIC CHANGE DURING DISCHARGE (n=1.405) | | | | | | | | |
|---|---|---|---|---|---|---|---|---|---|---|---|
| P | 0.6 | 1.4 | 2.9 | 2.6 | 2.3 | 2.0 | 1.7 | 1.4 | 1.1 | 0.9 | 0.6 |
| V | 200 | 80.0 | 48.8 | 52.7 | 57.3 | 63.0 | 70.3 | 80.0 | 93.8 | 115.1 | 153.6 |
| POLYTROPIC INDEX | | 1.00 | 1.405 | 1.405 | 1.405 | 1.405 | 1.405 | 1.405 | 1.405 | 1.405 | 1.405 |
| ΔV | | | -120.0 | -151.2 | -147.3 | -142.7 | -137.0 | -129.7 | -120.0 | -106.2 | -84.9 | -46.4 |

ADIABATIC CHANGE

| | DURING GAS INCLUSION | DURING ACCUMULATION | POLYTROPIC CHANGE DURING DISCHARGE (n=1.00) | | | | | | | | |
|---|---|---|---|---|---|---|---|---|---|---|---|
| P | 0.6 | 1.4 | 2.9 | 2.6 | 2.3 | 2.0 | 1.7 | 1.4 | 1.1 | 0.9 | 0.6 |
| V | 200 | 80.0 | 40.0 | 44.4 | 50.0 | 57.1 | 66.7 | 80.0 | 100.0 | 133.3 | 200.0 |
| POLYTROPIC INDEX | | 1.00 | 1.00 | 1.00 | 1.00 | 1.00 | 1.00 | 1.00 | 1.00 | 1.00 | 1.00 |
| ΔV | | | -120.0 | -160.0 | -155.6 | -150.0 | -142.9 | -133.3 | -120.0 | -100.0 | -66.7 | 0.0 |

ISOTHERMAL CHANGE

## FIG. 6

| HP PRESSURE | | LP PRESSURE | | | | | | |
|---|---|---|---|---|---|---|---|---|
| | | -142.7 | -137.0 | -129.7 | -120.0 | -106.2 | -84.9 | -46.4 |
| | | 2.3 | 2.0 | 1.7 | 1.5 | 1.1 | 0.9 | 0.6 |
| -97.1 | 100 | 560.1 | 565.8 | 573.1 | 582.9 | 596.6 | 617.9 | 656.4 |
| -92.7 | 94 | 564.5 | 570.2 | 577.5 | 587.3 | 601.0 | 622.3 | 660.8 |
| -87.9 | 86 | 569.4 | 575.1 | 582.4 | 592.1 | 605.9 | 627.2 | 665.7 |
| -82.4 | 83 | 574.8 | 580.6 | 587.9 | 597.6 | 611.4 | 632.7 | 671.2 |
| -76.3 | 77 | 581.0 | 586.7 | 594.0 | 603.7 | 617.5 | 638.8 | 677.3 |
| -69.3 | 71 | 587.9 | 593.7 | 601.0 | 610.7 | 624.5 | 645.8 | 684.3 |
| -61.3 | 66 | 595.9 | 601.6 | 608.9 | 618.7 | 632.5 | 653.8 | 692.3 |
| -52.0 | 60 | 605.2 | 610.9 | 618.2 | 628.0 | 641.7 | 663.0 | 701.5 |
| -41.1 | 54 | 616.1 | 621.8 | 629.1 | 638.9 | 652.7 | 674.0 | 712.5 |
| -28.0 | 49 | 629.2 | 634.9 | 642.2 | 652.0 | 665.7 | 687.0 | 725.5 |

ADIABATIC CHANGE

## FIG. 7

| HP PRESSURE | | LP PRESSURE | | | | | | |
|---|---|---|---|---|---|---|---|---|
| | | -150.0 | -142.9 | -133.3 | -120.0 | -100.0 | -66.7 | 0.0 |
| | | 2.3 | 2.0 | 1.7 | 1.5 | 1.1 | 0.9 | 0.6 |
| -97.1 | 100 | 560.1 | 565.8 | 573.1 | 582.9 | 596.6 | 617.9 | 656.4 |
| -90.9 | 94 | 566.3 | 572.1 | 579.4 | 589.1 | 602.9 | 624.2 | 662.7 |
| -83.9 | 86 | 573.4 | 579.1 | 586.4 | 596.1 | 609.9 | 631.2 | 669.7 |
| -75.9 | 83 | 581.4 | 587.1 | 594.4 | 604.1 | 617.9 | 639.2 | 677.7 |
| -66.7 | 77 | 590.6 | 596.3 | 603.6 | 613.3 | 627.1 | 648.4 | 686.9 |
| -56.0 | 71 | 601.3 | 607.0 | 614.3 | 624.0 | 637.8 | 659.1 | 697.6 |
| -43.5 | 66 | 613.8 | 619.5 | 626.8 | 636.5 | 650.3 | 671.6 | 710.1 |
| -28.6 | 60 | 628.7 | 634.4 | 641.7 | 651.4 | 665.2 | 686.5 | 725.0 |
| -10.5 | 54 | 646.7 | 652.4 | 659.7 | 669.5 | 683.2 | 704.6 | 743.0 |
| 0.0 | 49 | 657.3 | 663.0 | 670.3 | 680.0 | 693.8 | 715.1 | 753.6 |

ISOTHERMAL CHANGE

## FIG. 8

RELATIONSHIP BETWEEN HP·LP PRESSURE AND OIL AMOUNT
(ADIABATIC CHANGE)

## FIG. 9

RELATIONSHIP BETWEEN HP·LP PRESSURE AND OIL AMOUNT
(ISOTHERMAL CHANGE)

# FIG. 10

```
                    ┌──────────────┐
                    │    START     │
                    └──────┬───────┘
                           │
                           ▼
          ┌─────────────────────────────┐
          │  OBTAIN GAS PRESSURE        │─── S1
          │  IN ACCUMULATOR             │
          └──────────────┬──────────────┘
                         │
                         ▼
          ┌─────────────────────────────┐
          │  MEASURE OIL AMOUNT         │─── S2
          │  IN OIL TANK                │
          └──────────────┬──────────────┘
                         │
                         ▼
          ┌─────────────────────────────┐
          │  DETERMINE THRESHOLD BASED  │
          │  ON CHANGE IN VOLUME        │─── S3
          │  CALCULATED FROM GAS        │
          │  PRESSURE                   │
          └──────────────┬──────────────┘
                         │
                         ▼
          ┌─────────────────────────────┐
          │  COMPARE MEASURED OIL       │─── S4
          │  AMOUNT WITH THRESHOLD      │
          └──────────────┬──────────────┘
                         │
                         ▼
              ╱────────────────────╲          NO
             ╱   MEASURED OIL AMOUNT ╲────────────┐
             ╲   < THRESHOLD ?       ╱            │
              ╲────────────────────╱              │
                         │ YES                    │
                         ▼        S5              ▼      S6
          ┌──────────────────────┐   ┌──────────────────────┐
          │     OIL LEAK         │   │    NO OIL LEAK       │
          └──────────────────────┘   └──────────────────────┘
```

# FIG. 11

## FIG. 12A

## FIG. 12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1650014584 A
- US 2001142596 A
- EP 2270342 A
- WO 9523958 A
- EP 2182208 A
- DE 102007009575
- DE 102008027365
- WO 2007053036 A
- US 20100032959 A
- US 7436086 B
- WO 1990014584 A
- WO 19900144584 A